# EUROPÄISCHE PATENTSCHRIFT

(11) **EP 2 529 694 B1**
(45) Veröffentlichungstag und Bekanntmachung des Hinweises auf die Patenterteilung: **15.11.2017**
(21) Anmeldenummer: 11168182.1
(22) Anmeldetag: 31.05.2011
(51) Int. Cl.: A61C 13/08, A61C 13/00, C04B 35/638, C04B 35/634, C04B 35/632, C04B 35/119, C04B 35/488

(54) **Verfahren zur generativen Herstellung von Keramikformkörpern durch 3D-Inkjet-Drucken**
Method for generative production of ceramic forms by means of 3D jet printing
Procédé de génération de formes en céramique par jet d'impression 3D

(43) Veröffentlichungstag der Anmeldung: 05.12.2012
(73) Patentinhaber: Ivoclar Vivadent AG, 9494 Schaan (LI)
(72) Erfinder: Cavegn, Katja, Dr., 9492 Eschen (LI); Laubersheimer, Jürgen, Dr., 9470 Buchs (CH); Rheinberger, Volker, Dr., 9490 Vaduz (LI); Schmid, David, 7204 Untervaz (CH)
(74) Vertreter: Uexküll & Stolberg

(56) Entgegenhaltungen:
- WO-A1-02/40744
- US-A1- 2004 058 200
- US-A1- 2005 023 710
- US-A1- 2006 172 073
- US-A1- 2007 175 103
- US-A1- 2010 028 645
- US-A1- 2010 029 801
- MOTT M ET AL: "Zirconia/alumina functionally graded material made by ceramic ink jet printing", MATERIALS SCIENCE AND ENGINEERING A: STRUCTURAL MATERIALS: PROPERTIES, MICROSTRUCTURES AND PROCESSING, ELSEVIER BV, NL, vol. A271, 1 January 1999 (1999-01-01), pages 344-352, XP002438618, ISSN: 0921-5093

## Beschreibung

Die vorliegende Erfindung betrifft ein Verfahren zur Herstellung von Keramikformteilen und insbesondere von Dentalrestaurationen durch dreidimensionales Drucken.

Zur Herstellung von Formkörpern werden in zunehmendem Maße sogenannte "aufbauende Verfahren" eingesetzt. Als Synonym für diese "aufbauenden" Möglichkeiten wird oftmals der Begriff "Generative Fertigungsverfahren" verwendet. Unter diesen Begriffen werden verschiedene generative Fertigungsverfahren zusammengefasst, bei denen aus computergestützten Konstruktionsdaten (CAD-Daten) 3-dimensionale Modelle oder Bauteile hergestellt werden (A. Gebhardt, Vision of Rapid Prototyping, Ber. DGK 83 (2006) 7-12). Beispiele für typische generative Fertigungsverfahren sind Stereolithographie, 3-D-Printing und Inkjet-Modeling. Das Prinzip des Rapid Prototyping beruht auf dem schichtweisen Aufbau eines dreidimensionalen Bauteils. Dabei werden zweidimensionale Schichten (xy-Ebene) aufeinandergelegt. Je nach Dicke der Schichten entsteht in Baurichtung (z-Richtung) eine mehr oder minder starke Abstufung des Bauteils.

Derzeit sind hauptsächlich zwei unterschiedliche Methoden des Inkjet-Druckens zur Herstellung dreidimensionaler Körper in Gebrauch. Bei der ersten Methode wird eine Bindemittellösung auf eine Pulverbettschicht gedruckt. Dieser Binder "verklebt" die Pulverpartikel und fixiert sie so an Ort und Stelle. Durch erneutes Auftragen einer weiteren Pulverschicht und erneutes Drucken des Binders in die Pulverschicht kann so schichtweise ein dreidimensionaler Körper generiert werden. Nach Abschluss des Druckprozesses wird der Formkörper aus der Pulverschüttung entnommen und vom überschüssigen Pulver gereinigt. Der generierte Formkörper kann sofort verwendet werden, sofern er z.B. aus Kunststoff hergestellt wurde. Besteht der Formkörper aus keramischen Partikeln und soll er abschliessend ein dichtes keramisches Bauteil ergeben, so muss noch ein thermischer Prozessschritt erfolgen, in dem der Formkörper entbindert und dicht gesintert wird. Beim Entbindern werden die organischen Bindemittel pyrolysiert. Die Prozessparameter der Entbinderung und Sinterung richten sich hierbei u.a. nach Art und Anteil des Bindemittels und nach dem keramischen Werkstoff. Häufig ist eine abschliessende Oberflächenhandlung, wie z.B. Polieren oder Glasieren, erforderlich.

Die US 6,322,728 beschreibt die Anwendung eines derartigen Verfahrens zur Herstellung dentaler Restaurationen. Nachteilig an diesem Verfahren ist, dass es aufgrund der geringen Packungsdichte des Pulverbetts und der dadurch resultierenden hohen Porosität des 3-D-Objektes nach dem Ausbrennen des Bindemittels sehr schwierig ist, einen dichten Sinterkörper zu erhalten. Üblicherweise sind nach diesem Verfahren Formkörperdichten von weniger als 50% der theoretischen Dichte nach dem Entbindern und Dichten und von weniger als 95% der theoretischen Dichte nach dem Dichtsintern erreichbar. Die geringen Dichten der Formkörper haben eine nur ungenügende Endfestigkeit zur Folge, so dass die Körper als Dentalwerkstücke kaum verwendbar sind.

Bei der zweiten Methode werden mit Feststoffpartikeln gefüllte Tinten verwendet und daraus dreidimensionale Körper direkt gedruckt. Bei dieser Methode wird keine Pulverschüttung benötigt. Der dreidimensionale Körper wird auch hier schichtweise aufgebaut, indem jeweils eine zweidimensionale Schicht (xy-Ebene) gedruckt und gehärtet wird. Die Härtung kann beispielsweise durch Polymerisation, Trocknung oder Verfestigung durch Abkühlung erfolgen. Simultan kann ein leicht entfernbares Stützmaterial verdruckt werden, welches das Drucken überhängender Bereiche ermöglicht. Durch wiederholtes Übereinanderdrucken (z-Richtung) von Schichten aus Modell- und gegebenenfalls Stützmaterial entsteht ein dreidimensionales Objekt. Nach Trennen des gedruckten Objektes von der Stützstruktur, beispielsweise durch selektives chemisches Lösen des Stützmaterials, liegt ein 3-D-Bauteil vor.

Die DE 10 2006 015 014 A1 offenbart ein Verfahren zur Herstellung keramischer Formkörper durch lagenweises Inkjet-Drucken einer Suspension, die 50 bis 80 Gew.-% Keramikteilchen, ein wässriges Böhmitsol, einen niedermolekularen Alkohol, einen Trocknungshemmer und einen organischer Verflüssiger enthält, und anschließendes Trocknen und Aushärten des Lagenverbunds. Vorzugsweise wird jede einzelne Lage vor dem Aufbringen der nächsten Lage getrocknet, ebenso ist eine abschließende Trocknung nach Aufbau des vollständigen dreidimensionalen Körpers bevorzugt. Das Verfahren soll sich zur Herstellung von Zahnimplantaten, -inlays, -kronen und -brücken eignen. Nachteilig ist der enorm hohe Zeitaufwand dieses Verfahrens, da jede einzelne aufgedruckte Schicht getrocknet werden muss.

Die EP 2 233 449 A1 beschreibt die Herstellung von Keramikformteilen durch ein Hot-Melt-Inkjet-Verfahren. Hierbei werden mit Keramikpartikeln gefüllte, wachshaltige Schlicker bei einer Temperatur im Bereich von 60 bis 140 °C verdruckt. Unmittelbar nach dem Auftreffen auf die Bauplattform erstarrt der Schlicker durch Temperaturabfall. Zusätzlich wird jede Schicht durch Photopolymerisation gehärtet. Der so erhaltende Grünling wird durch Entbindern und Sintern weiterverarbeitet.

Die beschriebenen Verfahren ergeben Keramikformkörper, die aus einer Keramik homogen aufgebaut sind. Um das Aussehen des natürlichen Zahns möglichst wirklichkeitsgetreu nachzuahmen ist es jedoch erforderlich, unterschiedliche Materialien, die sich beispielsweise in Farbe und Transluzenz unterscheiden, miteinander zu kombinieren.

Die EP 1 859 757 A2 offenbart ein Verfahren zur Herstellung von keramischen Dentalrestaurationen, bei dem verschiedenfarbige Keramikpulver schichtweise je nach gewünschter Schichtdicke und Farbverlauf nacheinander homogen in eine Pressform eingefüllt werden. Das Pulver wird anschließend kaltisostatisch verpresst und danach zu einem Rohling gesintert. Der Rohling wird dann durch Fräsen oder Schleifen mittels einer CAD/CAM-Anlage zu einem dentalen Formteil geformt. Bei diesem Verfahren ist aus praktischen Gründen die Anzahl der Schichten beschränkt und ein Farbverlauf nur in eine Raumrichtung erzielbar.

Unter Gradientenwerkstoffe sind Werkstoffe zu verstehen, deren Zusammensetzung, Struktur und Gefüge sich graduell über das Volumen ändern, was mit entsprechenden Änderungen der Materialeigenschaften verbunden ist. Daraus ergibt sich die Möglichkeit, Materialien herzustellen, die an bestimmte Anwendungen angepasst sind. Gradientenwerkstoffe werden auch als gradierte Werkstoffe oder FGM (functionally graded material) bezeichnet.

Gradierte Werkstoffe sind aufgrund ihrer besonderen physikalischen Eigenschaften in vielen Bereichen von hohem Interesse. In technischen Bereichen kann mit Hilfe funktionalisiert gradierter Formkörper ein gezieltes Werkstoffdesign realisiert werden, um speziellen Anforderungen im jeweiligen Einsatzbereich gerecht zu werden. Es wurden zahlreiche Bemühungen zur Herstellung gradierter Werkstoffe unternommen. Eine funktionalisierte Gradierung entsteht durch den gezielten Aufbau eines Werkstückes durch zwei oder mehrere Materialien. Die meistverwendeten Werkstoffpaarungen hierbei sind Keramik-Metall, Keramik-Keramik und Keramik-Glas.

López-Esteban et al., Journal of the European Ceramic Society 22 (2002) 2799-2804, offenbaren einen funktionellen Gradientenwerkstoff, der dadurch erhalten wird, dass ZrO₂-Partikel und Stahlpulver im Wasser dispergiert werden. Der Feststoffgehalt liegt zwischen 70 und 80 Gew.-%. Diese Dispersionen werden in Kunststoffröhrchen gegossen, getrocknet und anschließend gesintert. Durch die unterschiedlichen Sedimentationsgeschwindigkeiten der Partikel bildet sich ein Gradient aus.

Watanabe et al., Composites Part A 29A (1998) 595-601 untersuchen die Herstellung von Gradientenwerkstoffen durch die Zentrifugation von Mischungen aus Gips- und Korundpartikeln. Die Werkstoffe dienen als Modellmaterialien zur Überprüfung von Computersimulationen.

Balla et al., Acta Biomaterials 5 (2009) 1831-1837, offenbaren die Herstellung von Ti-TiO₂-Gradientenwerkstoffen durch schichtweise Laserbestrahlung von Ti und TiO₂-Pulvern (laser engineered net shaping), wobei der TiO₂-Gehalt von Schicht zu Schicht erhöht wird. Die Anwesenheit von TiO₂ auf Titanoberflächen soll deren Benetzbarkeit verbessern und damit den Reibungskoeffizienten zu ultrahochmolekularem Polyethylen verringern. Die Materialien sollen zur Herstellung künstlicher Hüftgelenke vorteilhaft sein.

Takagi et al., Journal of the European Ceramic Society 23 (2003) 1577-1583, offenbaren die Herstellung von Bleizirkonat-Titanat (PZT)/Pt piezoelektrischen Kompositen und Stelleinheiten aus Gradientenwerkstoff. Sowohl die Komposite als auch die Stelleinheiten werden aus PZT- und Platinpulver durch isostatisches Pressen und Sintern hergestellt. Die Stelleinheiten bestehen aus sieben Schichten mit einem zentrumssymmetrischen Profil. Der Platingehalt nimmt von der zentralen Schicht zur Oberflächenschicht stufenweise von 30% Platin auf 0% Platin ab.

Moon et al., Materials Science and Engineering A298 (2001) 110-119, beschreiben die Herstellung von SiC-Si Gradientenmaterialien durch ein dreidimensionales Druckverfahren. Hierzu werden zunächst aus Kohlenstoffpulver durch dreidimensionales Drucken poröse Körper hergestellt, deren Porosität durch den Druckprozess variiert wird. Die porösen Kohlenstoffformkörper werden anschließend im Vakuum in eine Si-Schmelze eingetaucht und mit dem schmelzflüssigen Silizium infiltriert. Beim dreidimensionalen Drucken wird ein Bindemittel durch Inkjet-Drucken selektiv in ein Pulverbett eingebracht. Auf die so gebildete Schicht wird eine neue Pulverlage aufgebracht und diese dann wieder durch das Einbringen von Bindemittel selektiv gehärtet. Diese Abfolge von Verfahrensschritten wird solange wiederholt, bis der gewünschte Körper fertig gestellt ist.

C. Kaya, Journal of the Europan Ceramic Society 23 (2003) 1655-1660 offenbart die Herstellung von Al₂O₃-ZrO₂ / Al₂O₃ Gradientenmaterialien durch elektrophoretische Abscheidung. Dabei wird eine stiftförmige Stahlelektrode zunächst in eine Aufschlämmung von Zirkoniumdioxid und Böhmit eingetaucht. Durch Anlegen einer Spannung werden die Böhmit- und Zirkoniumdioxidpartikel auf der Elektrode abgeschieden. Anschließend wird die Elektrode in eine Al₂O₃ Dispersion überführt und eine Aluminiumoxidschicht auf der Böhmit- und Zirkoniumdioxidschicht abgeschieden. Der so erhaltene röhrenförmige Körper wurde anschließend getrocknet und gesintert.

Hvizdoš et al., Journal of the European Ceramic Society 27 (2007) 1365-1371, beschreiben die Herstellung von schichtweise aufgebauten Gradientenmaterialien durch elektrophoretische Abscheidung. Die Materialien weisen eine innere Schicht aus 70% Al₂O₃ und 30% ZrO₂ sowie zwei äußere Schichten jeweils aus 90% Al₂O₃ und 10% ZrO₂ auf.

Merino et al., Journal of the European Ceramic Society 30 (2010) 147-152, offenbaren die Herstellung von ZrO₂/NiO Gradientenmaterialien durch oberflächliches Anschmelzen gesinterter, eutektischer NiO/ZrO₂-Keramiken mit einem Laser.

Yoo et al., J. Am. Ceram. SOC., 81 (1) 21-32 (1998) beschreiben die Herstellung von mehrlagigen keramischen Gradientenwerkstoffen auf der Basis von mit Zirkoniumoxid verstärktem Aluminiumoxid (ZTA) durch ein dreidimensionales Druckverfahren. Hierbei wird eine wässrige Yttriumnitrat-Lösung in ein Pulverbett aus Al₂O₃- und ZrO₂-Partikeln gedruckt. Beim anschließenden Sintern und Abkühlen steuert das gebildete Y₂O₃ die Transformation von tetragonalen zu monoklinen ZrO₂-Phasen im ZTA und damit die Festigkeit des Werkstoffs. Das Dotieren mit unterschiedlichen Mengen an Y₂O₃ während des Druckens führt dabei zur Bildung unterschiedlicher Anteile an tetragonalen und monoklinen Phasen. Es konnten bis zu fünfschichtige Formkörper hergestellt werden, die nach dem Druckprozess allerdings noch isostatisch nachverdichtet werden mussten, um die notwendige Gründichte zu erreichen. Thermomechanische Spannungen führten beim Abkühlen zu Rissbildungen an der Grenzfläche zwischen monoklinen und tetragonalen Phasen.

Cannillo et al., Journal of the European Ceramic Society 27 (2007) 1293-1298, vergleichen unterschiedliche Verfahren zur Herstellung von Gradientenwerkstoffen auf der Basis von Glaskeramik. Bei der so genannten Perkolationsmethode wird ein Glas auf gesintertes Aluminiumoxid aufgebracht und dann geschmolzen, so dass es in das Aluminiumoxid penetrieren kann. Bei der zweiten Methode werden Schichten aus Glas und Aluminiumoxid mit einem Plasmabrenner auf einem Aluminiumsubstrat abgeschieden. Dieses Verfahren erwies sich als besser kontrollierbar und reproduzierbar als das Perkolationsverfahren.

Mott und Evans, Materials Science and Engineering A271 (1999) 344-352, beschreiben die Herstellung von Zirkoniumdioxid/Aluminiumoxid-Gradientenwerkstoffen durch direktes Ink-jet-Drucken von keramischen Tinten. Der Gradient wird dadurch erzeugt, dass das Tintenreservoir des Druckkopfes zunächst mit Zirkoniumoxidtinte gefüllt und dann die beim Drucken verbrauchte Tinte durch Aluminiumoxidtinte ersetzt wird, so dass der Aluminiumoxidanteil der Tinte im Verlauf des Druckvorgangs zunimmt. Der Feststoffanteil in den verwendeten Tinten beträgt hierbei 2,5 Vol.%. Dieser Vorgang ist nur bedingt kontrollierbar. Es werden Plättchen mit 1.200 Schichten hergestellt, die nach dem Drucken für 120 h bei Raumtemperatur getrocknet und anschliessend gesintert werden. Die erhaltenen Formkörper wiesen signifikante Porositäten auf.

Die Herstellung von gradierten Formkörpern ist ein technisch sehr aufwendiger Prozess. Keines der beschriebenen Verfahren ist in jeder Hinsicht zufriedenstellend. In der Praxis werden gradierte Werkstücke zurzeit hauptsächlich über das Trockenpressverfahren hergestellt. Bei der Trockenpresstechnik muss die Pressmatrize stufenweise mit den unterschiedlichen Materialien gefüllt werden, und der Rohling wird axial verpresst und ggf. abschliessend kaltisostatisch nachverdichtet. Trockenverpresste gradierte Formkörper weisen nur eine zweidimensionale Gradierung auf, eine dreidimensionale Gradierung lässt sich mit diesem Verfahren praktisch nicht umsetzen. Die Bauteile sind aus mehreren Schichten unterschiedlicher Materialien aufgebaut und weisen somit eine schichtförmige Gradierung auf. Jede einzelne Schicht besteht dabei entweder aus jeweils gleichem Material oder aus einer für die jeweilige Schicht definierten Mischung unterschiedlicher Materialien. Andere Fertigungsverfahren, wie z.B. die Elektrophorese, Infiltrationstechniken, Plasmasprühverfahren oder oberflächliche Laserbehandlungen, befinden sich noch in der Erprobungsphase und sind momentan erst Gegenstand aktueller Untersuchungen. Dabei stehen vorrangig die Evaluierung der Möglichkeiten und Grenzen der gewählten Verfahren sowie die Charakterisierung der spezifischen Eigenschaften der so generierten Formkörper im Vordergrund. Diese Verfahren sind gemäß dem jetzigen Stand der Technik nur zum Aufbau von Gradientenwerkstoffen geeignet, deren Gradierung sich in einer Raumrichtung ändert.

Die Aufgabe der Erfindung besteht darin, die Nachteile des bekannten Standes der Technik zu überwinden und ein Verfahren zur Herstellung eines keramischen Formkörpers zur Verfügung zu stellen, das sich insbesondere zur Herstellung von Dentalrestaurationen eignet. Das Verfahren soll die gezielte, unabhängige Variation von Materialeigenschaften wie z.B. Farbe, Transluzenz und/oder mechanische Festigkeit in allen drei Raumrichtungen ermöglichen und dicht gesinterte Formkörper mit hoher Enddichte ergeben. Aufgabe der Erfindung ist insbesondere die Bereitstellung eines Verfahrens, das die Herstellung von Dentalrestaurationen mit hoher mechanischer Belastbarkeit und guten optische Eigenschaften, d.h. einem möglichst naturgetreuem Aussehen erlaubt.

Die Aufgabe wird erfindungsgemäß durch ein Inkjet-Druckverfahren zur generativen Herstellung von Formkörpern nach Anspruch 1 gelöst. Die Formulierung, dass die relativen Anteile der Schlicker innerhalb einer Schicht entlang wenigstens einer Richtung in der Schichtebene in vorgebbarer Weise variieren, umfasst auch Ausführungsformen, bei der diese Schicht neben entlang der wenigsten in einer Richtung variierenden Bereiche auch Bereiche mit konstanter Zusammensetzung enthält.

Bei den erfindungsgemäß verwendeten Schlickern handelt es sich um Suspensionen von keramischen Partikeln in einen Dispersionsmittel. Die Schlicker werden hierin auch als keramisch gefüllte Inkjet-Tinten oder einfach als Tinten bezeichnet.

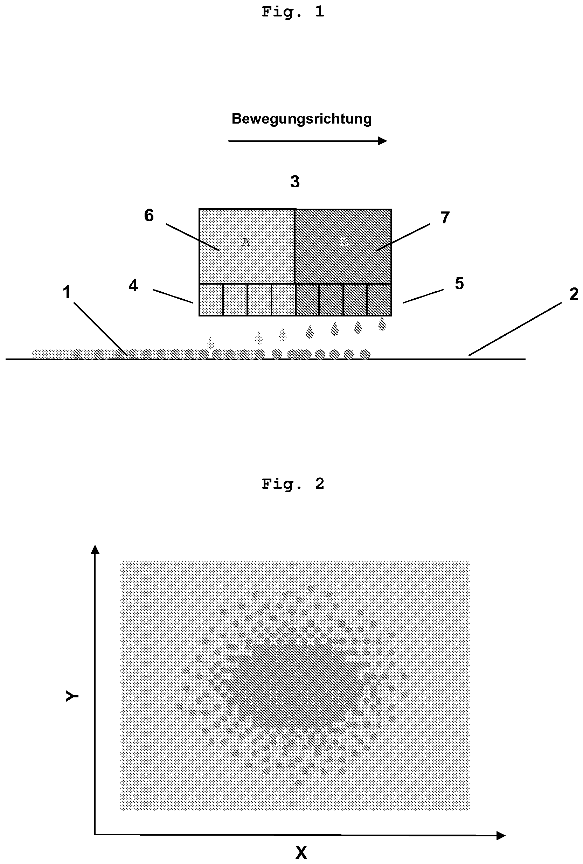

Im 3D Ink-Jet Druckverfahren erfolgt eine gezielte Dosierung und Positionierung einzelner Tropfen aus keramisch gefüllten Tinten. In dem erfindungsgemäßen Verfahren werden vorzugsweise sogenannte Multi-Düsen verwendet, z.B. Piezo-DoD-(drop on demand) Multi-Düsen-Hochtemperaturdruckköpfe, deren Düsen einzeln angesteuert werden können (Fig. 1). Derartige Druckköpfe werden z.B. in Menzel et al., MEMS Solutions for Precision Micro-Fluidic Dispensing Application, NIP20: International Conference on Digital Printing Technologies, Salt Lake City, UT, Oktober 2004, Volume 20, Seiten 169-175 beschrieben. Tropfenform und -anzahl sind hierbei durch verschiedene Regelparameter, wie u.a. Temperatur, Spannung, Impulsverlauf und Frequenz regelbar. Die Frequenz der Tropfengenerierung ist direkt an die Vorschubgeschwindigkeit des bzw. der Druckköpfe gekoppelt, so dass durch die Aneinanderreihung vieler einzelner Tropfen ein geschlossener Schichtaufbau erzielt wird (Fig. 2). Das Tropfenvolumen beträgt beispielsweise bei einem Düsendurchmesser von 50 µm und einer 36 Vol.% wachsbasierten ZrO₂-Tinte 90 pl. Durch das Tropfenvolumen und dessen spezifischen Eigenschaften, wie z.B. Oberflächenspannung, Benetzungsverhalten, Viskosität und Polymerisationsverhalten ergibt sich hieraus die sich ausbildende Höhe des geduckten und verfestigten Tropfens und somit letztendlich die Schichtdicke der Einzellage. Die Schichtdicke der Einzellage kann durch überlagerndes Drucken der Einzeltropfen variiert werden und beträgt bei dem obigen Beispiel ca. 15 - 30 µm. Durch die Verwendung mehrerer Multi-Düsen (Hochtemperatur-) Druckköpfe, die gemeinsam von einem Reservoir beschickt werden, lässt sich die Effizienz des Druckprozesses zusätzlich erhöhen. Die Auflösung bei diesem Verfahren liegt z.B. bei 500 dpi, die Positionsgenauigkeit bei ± 50 µm, bei einer Wiederholgenauigkeit von ± 30 µm.

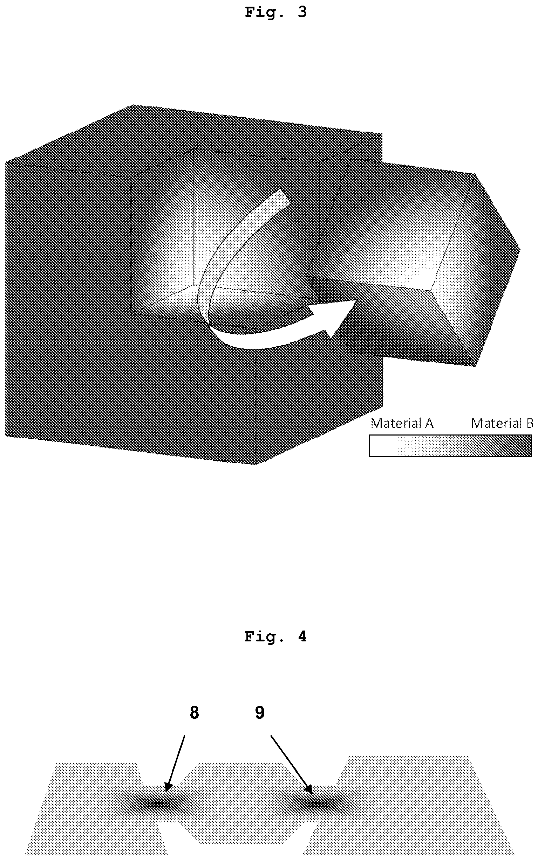

Durch eine gesteuerte Positionsverschiebung des oder der Druckköpfe relativ zur Bauplattform (Träger) in den Raumrichtungen x und y und, nach Vervollständigung der jeweiligen x-y Ebene, in z-Richtung, wird während des Druckprozesses durch einen schichtweisen Aufbau ein dreidimensionaler Formkörper generiert. Variiert man z.B. die chemische Zusammensetzung der einzelnen aufeinander gedruckten Schichten, wird ein räumlicher Gradient in der chemischen Zusammensetzung erzeugt. Dies ist in Fig. 3 schematisch dargestellt. Figur 3 zeigt einen würfelförmigen Formkörper mit einem sphärischen Kern aus dem Material A, das zum Rand des Kubus hin diskret in das Materials B übergeht. Sowohl die Geometrie als auch die räumliche Ausdehnung des Kernmaterials kann vorab definiert werden.

Erfindungsgemäß wird vorzugweise ein Drucker mit mehreren Druckköpfen eingesetzt. Der Drucker weist vorzugsweise mindestens zwei Druckköpfe auf, die jeweils aus unterschiedlichen Reservoiren gespeist werden, so dass zwei oder mehr unterschiedliche Schlicker verdruckt werden können. Diese Druckköpfe haben vorzugweise jeweils mehrere Düsen, d.h. es handelt sich um sogenannte Multi-Düsen- oder Multi-Nozzle-Druckköpfe. Besonders bevorzugt weist der Drucker 3 bis 20 und ganz besonders bevorzugt 6 bis 10 Drückköpfe auf, die einzeln oder gruppenweise aus unterschiedlichen Reservoiren beschickt werden (z.B. zwei Druckköpfe werden aus Reservoir A beschickt, zwei weitere Druckköpfe werden aus Reservoir B beschickt).

Zur Herstellung von gradierten Körpern wird vorzugsweise in den Schritten (a) und (b) zusammen mit dem Keramikschlicker oder im Anschluss an diese Schritte ein Stützmaterial aus einem separaten Druckkopf verdruckt. Stützmaterialien sind hierbei Materialien, die insbesondere zur Unterstützung von Unterschnitten und Überhängen der gedruckten Körper dienen. Als Stützmaterialien eignen sich insbesondere die zur Herstellung der Schlicker verwendeten Bindemittel und Wachse. Die Stützmaterialien enthalten keine keramischen Füllstoffe, können aber nicht verstärkende anorganische Füllstoffe, wie z.B. Kreide, Talk, enthalten die das mechanische entfernen der Stützstruktur erleichtern.

Das Verdrucken des Stützmaterials erfolgt vorzugweise mit einem oder zwei weitere Druckköpfen, die z.B. aus dem Reservoir C beschickt werden. In den Reservoiren A und B befinden sich jeweils Keramikschlicker, die sich in ihrer Zusammensetzung unterscheiden (z.B. Reservoir A gefüllt mit Tinte A, Reservoir B beinhaltet Tinte B). Durch eine gezielte Ansteuerung der Druckköpfe der jeweiligen Reservoire A und B wird eine zweidimensionale Schicht gedruckt (s. Fig. 1), deren chemische Zusammensetzung über die Ausdehnung der Schicht variiert (s. Fig. 2). Bereiche, die in dem gesinterten Formkörper Leerräumen entsprechen, werden mit dem Stützmaterial gedruckt. Auch hier sind Multi-Düsen- oder Multi-Nozzle-Druckköpfe bevorzugt.

Der durch schichtweisen Aufbau erhaltene, ungesinterte Körper wird als Grünkörper oder Grünling bezeichnet. Erfindungsgemäß wird ein Grünling hergestellt, indem man zwei oder mehr Schlicker z.B. in einem Inkjet-Druckverfahren zu der gewünschten geometrischen Form formt. Der Grünling wird hierbei durch die Generierung einzelner Tropfen aufgebaut. Ein Vorteil des erfindungsgemäßen Verfahren ist, dass die Zusammensetzung des Formkörpers durch Variation der verwendeten Schlicker punktgenau eingestellt werden kann.

Die Härtung der generierten Tropfen aus partikelgefüllten Tinten oder aus Stützmaterial erfolgt vorzugsweise durch Temperaturänderung und insbesondere durch radikalische Polymerisation, besonders bevorzugt durch Photopolymerisation. Die Härtung kann schichtweise erfolgen. Gemäß einer besonders bevorzugten Ausführungsform des erfindungsgemäßen Verfahrens wird jedoch jeder generierte Tropfen unmittelbar nach seinem Auftreffen auf der Bauplattform bzw. der vorhergehenden Schicht gehärtet und somit in seiner Position und Ausdehnung fixiert. Wachshaltige Schlicker werden hierbei durch Auskühlen und Polymerisation gehärtet, wachsfreie Schlicker ausschliesslich durch Polymerisation. Die Belichtung der generierten Tropfen oder Schichten erfolgt vorzugsweise parallel zum Druckprozess, z.B. durch seitlich zu den Druckköpfen angeordnete Lichtquellen, beispielsweise durch UV- oder Blaulichtlampen. Vorzugsweise erfolgt die Belichtung mit Licht im Wellenlängenbereich von 200-550 nm, bevorzugt mit einer Lichtleistung von mindestens 500 mW/cm².

Erfindungsgemäß werden mindestens zwei unterschiedlich zusammengesetzte Schlicker eingesetzt. Unter unterschiedlich zusammengesetzten Schlickern werden dabei Schlicker verstanden, deren unterschiedliche Zusammensetzung nach dem Entbindern und Sintern im Formkörper nachweisbar ist. Zwei Schlicker, die sich beispielweise ausschließlich in der Zusammensetzung des beim Entbindern entfernbaren Bindemittels (B) unterscheiden, sind keine unterschiedliche zusammengesetzten Schlicker im Sinne der Erfindung.

Erfindungsgemäß ist die Verwendung von zwei oder mehr Schlickern bevorzugt, die sich in der Zusammensetzung der Keramikpartikel unterscheiden. Dies ist so zu verstehen, dass die Schlicker unterschiedliche Keramiken (Schlicker A enthält Partikel der Keramik A; Schlicker B Partikel der Keramik B, usw.) und/oder unterschiedlich zusammengesetzte Mischungen von Keramikpartikeln enthalten (Schlicker A enthält z.B. 30 % Partikel der Keramik A und 70 % Partikel der Keramik B; Schlicker B enthält 70 % Partikel der Keramik A und 30 % Partikel der Keramik B; oder Schlicker A enthält Partikel der Keramik A und Schlicker B eine Mischung aus Partikeln der Keramik A und Partikel der Keramik B; usw.). Die Keramiken können sich allein in ihrer chemischen Zusammensetzung, in ihrer Farbe, in ihrer Transluzenz, in ihren mechanischen Eigenschaften oder in mehreren Parametern gleichzeitig unterscheiden. Eine unterschiedliche Zusammensetzung von Keramikpartikeln ist auch dann gegeben, wenn diese unterschiedlich gefärbt sind. Vorzugsweise werden die unterschiedlichen Färbungen der Keramikpartikel der verwendeten Schlicker dadurch erzielt, dass die Partikel mit farbgebenden Komponenten beschichtet sind, wie weiter unten beschrieben wird.

Eine unterschiedliche Zusammensetzung der erfindungsgemäß verwendeten Schlicker kann bei ansonsten gleicher Zusammensetzung auch dadurch erreicht werden, dass den Schlickern unterschiedliche farbgebende Komponenten zugesetzt werden. Hierzu sind insbesondere solche Substanzen geeignet, die beim Entbindern oder Sintern zu einer Einfärbung des hergestellten Formkörpers führen, vorzugsweise zu einer zahnfarbenen Einfärbung. Bevorzugte farbgebende Komponenten werden in Absatz [0062] der EP 2 151 214 A1 und in Absatz [0043] der EP 2 233 449 A1 beschrieben.

Als farbgebende Komponente bevorzugte Übergangsmetallverbindungen sind vor allem Acetylacetonate oder Carbonsäuresalze der Elemente Eisen, Cer, Praseodym, Terbium, Lanthan, Wolfram, Osmium, Terbium und Mangan. Bevorzugt sind die Salze der Carbonsäuren Essig-, Propion-, Butter-, 2-Ethylhexylcarbon-, Stearin- und Palmitinsäure. Besonders bevorzugt sind vor allem die entsprechenden Fe-, Pr-, Mn- und Tb-Verbindungen, wie z.B. Eisen(III)-acetat oder -acetylacetonat, Mangan(III)-acetat oder -acetylacetonat, Praseodym(III)-acetat oder -acetylacetonat oder Terbium(III)-acetat oder -acetylacetonat sowie die entsprechenden Carbonsäuresalze. Die farbgebende Komponente wird vorzugsweise in einer Menge von 0,00001 bis 2,0 Gew.-%, besonders bevorzugt 0,001 bis 1,0 Gew.-% und ganz besonders bevorzugt 0,01 bis 0,5 Gew.-% eingesetzt, bezogen auf die Gesamtmasse der Keramikpartikel (A).

Im Fall von Oxidkeramikpartikeln werden die farbgebenden Komponenten vorzugsweise auf die Keramikpartikel aufgebracht. Besonders bevorzugt ist das Verfahren nach EP 1 859 757 A2. Bei diesem Verfahren wird die farbgebende Substanz in einem Wirbelschichtreaktor auf ein ungefärbtes Oxidkeramik-Pulver aufgebracht. Als farbgebende Substanzen können vorzugsweise wässrige Lösungen der oben beschriebenen Salze zum Einsatz kommen. Bevorzugt sind wasserlösliche Salze von d- bzw. f-Elementen des Periodensystems. Besonders bevorzugt sind Nitrat- oder Chlorid-Hydrate. Beispiele für einsetzbare Salze sind Pr(NO₃)₃·5H₂O, Fe(NO₃)₃·9H₂O oder Tb(NO₃)₃·5H₂O. Die mit den farbgebenden Substanzen umhüllten Oxidkeramik-Pulver werden dann vorzugsweise klassiert, z.B. gesiebt mit Sieben einer Maschenweite von < 90 µm. Dies wird insbesondere dann durchgeführt, wenn eine zu starke Agglomerierung des Pulvers vorliegt.

Die in der Wirbelschicht eingefärbten Partikel können bevor sie zu einer Tinte aufbereitet werden, vorab kalziniert werden können. Die Kalzinierung der Partikel erfolgt bei Temperaturen von 100 bis 600 °C, bevorzugt bei 200 bis 550 °C, besonders bevorzugt bei 300 bis 500 °C für eine Zeit von 1 bis 10 h, bevorzugt für 2 bis 4 h.

Es ist auch möglich, die zur Färbung der Keramikpartikel verwendeten Komponenten in Form von getrennten Tinten aus einem oder mehreren separaten Druckköpfen zu verdrucken.

Partikel aus Gläsern und Glaskeramiken können gemäß dem Stand der Technik mit Oxiden der Übergangselemente eingefärbt werden.

Komponente (A) der erfindungsgemäß verwendeten Schlicker sind Keramikpartikel, wobei unter "Keramikpartikeln" Oxidkeramikpartikel und Glaskeramikpartikel aber auch Glaspartikel, vorzugsweise Oxidkeramik- oder Glaskeramikpartikel und Mischungen aus Glaskeramik- und Glaspartikeln verstanden werden. Oxidkeramiken sind feste, polykristalline, kieselsäurefreie Werkstoffe aus Oxiden oder Oxid-Verbindungen, vorzugsweise aus Metalloxidpulvern wie ZrO₂ und/oder Al₂O₃, die ohne Zersetzung gesintert werde können. Glaskeramiken sind polykristalline Festkörper, die neben einer oder mehreren kristallinen Phasen zusätzlich auch Glasphasenanteile enthalten. Glaskeramiken werden aus Gläsern durch gesteuerte Kristallisation gebildet. Bevorzugt sind Leucit-, Apatit- oder Lithiumdisilikat-haltige Glaskeramiken. Als Glaspulver sind Partikel aus solchen Gläsern bevorzugt, die durch Kristallisation in Glaskeramiken überführt werden können. Hierzu müssen die Gläser zwingend notwendige Kristallisationskeime beinhalten. Die Kristallisation kann durch das Entbindern, Sintern oder eine separate Temperaturbehandlung ausgelöst werden.

Bei den als Komponente (A) eingesetzten Oxidkeramikpartikeln handelt es sich vorzugsweise um Oxidkeramikpartikel auf der Basis von ZrO₂ und/oder Al₂O₃, beispielsweise Oxidpartikel aus ZrO₂, Al₂O₃ oder ZrO₂-Al₂O₃, oder Oxidpartikel aus ZrO₂ oder ZrO₂-Al₂O₃, das mit Y₂O₃ oder MgO stabilisiert ist.

Besonders bevorzugt sind stabilisierte Oxidkeramiken, die neben dem Basisoxid ZrO₂ ein Stabilisierungsmittel enthalten. Als Stabilisierungsmittel werden vorzugsweise Y₂O₃, CeO₂ oder Mischungen beider Satbilisierungsmittel verwendet. Y₂O₃ wird hierbei üblicherweise in der Konzentration bis zu 5 Mol.% verwendet. Für CeO₂ sind Dotierungen von bis zu 12 Mol.% üblich, bezogen auf die Masse der stabilisierten Keramik. Diese ZrO₂-Keramiken werden als Y-TZP (Yttrium Stabilized Tetragonal Zirconium Dioxide Polycrystals) bzw. Ce-TZP (Cer Stabilized Tetragonal Zirconium Dioxide Polycrystals) bezeichnet. Die Festigkeit von Y-TZP kann durch die Zugabe von Al₂O₃ weiter erhöht werden. Derartige Keramiken werden als AZT (alumina toughened zirconia) bezeichnet. Ein bevorzugtes ATZ enthält 80 Gew.-% Y-TZP und 20 Gew.-% Al₂O₃ und weist eine mechanische Biegefestigkeit von 2.000 MPa auf.

Bevorzugt sind Oxidkeramiken, die ausschließlich aus den genannten Stoffen bestehen.

Bei der Herstellung von Dentalrestaurationen wird einerseits eine hohe mechanische Belastbarkeit angestrebt, beispielsweise bei der Herstellung von Brücken, andererseits sollen dentale Restaurationen ein möglichst natürliches Aussehen aufweisen. Beide Eigenschaften lassen sich in der Regel nicht mit einem einzigen Material in optimaler Weise verwirklichen. Eine beliebige Kombination unterschiedlicher Werkstoffe zur Optimierung dieser Eigenschaften ist aber auch nicht möglich, da z.B. unterschiedliche Wärmeausdehnungskoeffizienten zu thermomechanischen Spannungen und unterschiedliche Sintertemperaturen zu einer unerwünscht hohen Porosität führen können.

Erfindungsgemäß wurde nun gefunden, dass sich eine hohe mechanische Festigkeit und gute optische Eigenschaften ohne die genannten Nachteile dadurch verwirklichen lassen, dass man als Schlicker in den Verfahrenschritten (a) bis (c) mindestens einen ersten Schlicker auf der Basis von ZrO₂ und insbesondere auf der Basis von Y-TZP (Basisschlicker) und mindestens einen zweiten Schlicker auf der Basis von Al₂O₃ verwendet (Sekundärschlicker).

Der Basisschlicker enthält vorzugsweise als Keramikpartikel ausschließlich Y-TZP-Partikel. Bei diesem Verfahren können auch mehrere unterschiedlich gefärbte Basisschlicker verwendet werden, wobei hierbei die Verwendung von Schlickern bevorzugt ist, die unterschiedliche gefärbte Y-TZP-Partikel enthalten.

Der Sekundärschlicker enthält vorzugsweise Partikel einer Keramik, die 20 bis 100 Gew.-% Al₂O₃ und 0 bis 80 Gew.-% Y-TZP, bevorzugt 40 bis 60 Gew.-% Al₂O₃ und 60 bis 40 Gew.-% Y-TZP, besonders bevorzugt 20 Gew.-% Al₂O₃ und 80 Gew.-% Y-TZP enthält. Bevorzugt sind Schlicker, die ausschließlich Partikel aus Al₂O₃ bzw. Al₂O₃ und Y-TZP enthalten. Es können mehrere unterschiedlich gefärbte Sekundärschlicker verwendet werden, wobei auch hier die Verwendung von Schlickern bevorzugt ist, die unterschiedliche gefärbte Al₂O₃ und/oder Y-TZP-Partikel enthalten.

Eine lokale Verstärkung von keramischen Formkörpern ist beispielsweise bei der Herstellung von vollkeramischen Brückengerüsten von grosser Bedeutung. Eine gezielte Verstärkung eines keramischen Brückengerüstes, z.B. aus Y-TZP, im mechanisch besonders beanspruchten Verbindungsgliedbereich, wie in Fig. 4 schematisch dargestellt, ist vorteilhaft durch die Verwendung z.B. von ATZ möglich, da sich die thermischen Ausdehnungskoeffizienten der beiden Keramiken (Y-TZP und ATZ-Keramik) nicht signifikant von einander unterscheiden. In ästhetisch wichtigen Bereichen (Käppchen und Brückenglieder) wird demgegenüber das transluzentere Y-TZP verwendet.

ATZ-Keramik (alumina toughened zirconia) mit 80 Gew.-% Y-TZP und 20 Gew.-% Al₂O₃ eignet sich aufgrund ihrer mechanischen Eigenschaften besonders zur gezielten Verstärkung von mechanisch belasteten Bereichen von Dentalrestaurationen. Erfindungsgemäß kann dies dadurch erzielt werden, dass Basisschlicker und Sekundärschlicker so verdruckt werden, dass in den zu verstärkenden Bereichen ein Verhältnis von 20 Gew.-% Al₂O₃ und 80 Gew.-% Y-TZP erreicht wird. Das Mischungsverhältnis kann während des Druckvorgangs eingestellt werden. Es lässt sich durch die Verwendung von Schlickern erreichen, die 100 Gew.-% Y-TZP bzw. 100 Gew.-% Al₂O₃ enthalten, jeweils bezogen auf den Keramikanteil des Schlickers, oder auch durch Schlicker, die z.B. 100 Gew.-% Y-TZP bzw. 20 Gew.-% Al₂O₃ und 80 Gew.-% Y-TZP enthalten, wobei im zweiten Fall die zu verstärkenden Bereiche durch alleiniges Verdrucken des Sekundärschlickers gebildet werden. Diese Variante ist erfindungsgemäß bevorzugt. Der Übergang vom verstärkten Verbindungsstegbereich (ATZ-Keramik) zum transluzenteren Käppchen wird vorzugweise graduell gestaltet, um einen fliessenden Übergang zwischen beiden Materialien zu erzielen und somit ein homogenes keramisches Gefüge zu erzielen.

Ebenso können mit dem erfindungsgemäßen Verfahren gezielte farbliche Gradierungen bei der Herstellung von oxidkeramischen Zahnersatz umgesetzt werden. Hierzu werden in dem oben beschriebenen Verfahren mehrere unterschiedlich gefärbte Schlicker verwendet. Zur farblichen Gradierung werden vorzugsweise 2 oder mehr, besonders bevorzugt 2 bis 10 und ganz besonders bevorzugt 3 bis 6 unterschiedlich gefärbte Schlicker eingesetzt. Da sich natürliche Zähne nicht nur hinsichtlich Farbe, Farbintensität und Helligkeit sondern auch in der Transluzenz unterscheiden, ist es für die Herstellung von natürlich aussehenden, zahnfarbenen, vollkeramischen Dentalrestaurationen vorteilhaft, mehr als zwei Schlicker zum Aufbau des Gradienten zu verwenden, wobei deren Anzahl letztendlich von der Zahnfarbe und vom ästhetischen Anspruch an die dentale Restauration abhängen. Für den Aufbau von farblich gradierten Dentalrestaurationen mit hoher mechanischer Belastbarkeit werden vorzugsweise Tinten auf der Basis von eingefärbten ZrO₂ oder Y-TZP-Partikel verwendet.

Dentalrestaurationen mit besonders natürlichen Farbverläufen lassen sich herstellen, wenn als Komponente (A) Glaskeramikpartikel oder eine Mischung von Glas- und Glaskeramikpartikeln verwendet wird. Besonders bevorzugt sind Leucit-, Apatit- und/oder Lithiumdisilikat-Glaskeramikpartikel. Die farbliche Gradierung erfolgt vorzugsweise durch das Drucken von 2 oder mehreren, besonders bevorzugt 2 bis 10 und ganz besonders bevorzugt 3 bis 6 Tinten mit unterschiedlich eingefärbten Partikeln. Hierbei werden die Bereiche der Restauration in marginalen und zentralen Bereichen aus intensiver gefärbten und getrübten Partikeln aufgebaut, während in den inzisalen und peripheren Bereichen weniger stark gefärbte und weniger trübe Partikel eingesetzt werden, ähnlich dem natürlichen Zahnfarbenverlauf.

Die Keramikpartikel sollten deutlich kleiner als der mittlere Durchmesser der Düse des Druckkopfs des Inkjet-Druckers sein, mit dem der Schlicker verdruckt wird. Um das Verdrucken mit gängigen Inkjet-Druckern, die z.B. einen Düsendurchmesser von etwa 100 µm oder kleiner aufweisen, zu ermöglichen, werden in dem erfindungsgemäßen Schlicker bevorzugt sogenannte Submikron-Pulver eingesetzt, d.h. Keramikpartikel mit einer maximalen Partikelgröße von kleiner oder gleich 5 µm, insbesondere kleiner oder gleich 1 µm. Vorzugsweise weisen die Partikel eine Größe von 0,01 bis 5 µm, besonders bevorzugt von 0,1 bis 1 µm und ganz besonders bevorzugt von 0,3 bis 0,6 µm auf.

Unter "Partikelgröße" ist die tatsächliche Größe der Keramikteilchen zu verstehen, so wie sie in dem Schlicker vorliegen. Typischerweis ist dies die Primärpartikelgröße, da eventuell im Keramikpulver vorhandene Agglomerate bei der Herstellung des Schlickers weitgehend in Primärpartikel zerlegt werden. Es können jedoch auch Agglomerate von Keramikprimärteilchen im Schlicker vorliegen, solange sie genügend klein sind, um mit den gewünschten Inkjet-Düsen verdruckt werden zu können, d.h. in bevorzugten Ausführungsformen erfüllen die Agglomerate als Ganzes die obigen Partikelgrößenbedingungen.

Bei Al₂O₃ liegt die Größe der als Komponente (A) verwendeten Primärpartikel vorzugsweise im Bereich von 50 bis 500 nm, besonders bevorzugt zwischen 75 und 200 nm; bei Y-TZP im Bereich von 50 und 500 nm, ganz bevorzugt zwischen 50 und 350 nm. Die verwendeten Glas-/Glaskeramikpartikel weisen eine Primärpartikelgröße von 0,1 bis 10 µm, besonders bevorzugt von 0,5 bis 5 µm auf. Bei den Primärpartikelgrößen handelt es sich um die absoluten Ober- und Untergrenzen.

Die Keramikpartikel sind vorzugsweise annähernd kugelförmig. Es ist weiterhin günstig, wenn die Partikel in nicht agglomerierter Form vorliegen, beispielsweise ganz oder überwiegend in Form von Primärpartikeln.

Als radikalisch polymerisierbare Bindemittel (Komponente B) des erfindungsgemäß verwendeten Schlickers sind radikalisch polymerisierbare Monomere oder Mischungen davon bevorzugt. Vorzugsweise ist das Monomer bei 20 °C flüssig. Der Schmelzpunkt liegen vorzugsweise unter 0 °C. Vorzugsweise ist das Monomer homogen, d.h. ohne Phasentrennung, mit dem optionalen Wachs (C) mischbar. Das Monomer sollte sich bei Verarbeitungstemperatur, etwa der später beschriebenen Temperatur beim Inkjet-Drucken, nicht zersetzen. Typischerweise besitzt das Monomer einen großen unpolaren Rest, z.B. einen C₈- bis C₂₀-Rest.

Insbesondere kommen in den Schlickern Monomere zur Verwendung, die ein oder mehrere, z.B. zwei, (Meth)acryloyl-Gruppen aufweisen, wobei Monomere mit (Meth)acryloyloxy-Gruppen bevorzugt sind. Beispiele für geeignete radikalisch polymerisierbare Monomere sind (Meth)acrylate und Di(meth)acrylate mit einer Kettenlänge des Alkoholrests von C₈ bis C₁₈, wie etwa Octadecylacrylat; mehrfach (meth)acrylierte Glykole, insbesondere mehrfach (meth)acrylierte Propylenglykole; mehrfach (meth)acrylierte kurz- bis mittelkettige Polypropylenglykole mit einem bevorzugten M_{w} von 200-2000, besonders bevorzugt 300-1000, wie etwa Dipropylenglykoldiacrylat und Polypropylenglykoldiacrylate, z.B. Polypropylenglykol-400-diacrylat; Pentae-rythritdi(meth)acrylat-Monocarboxylate mit einer Kettenlänge von C₈ bis C₁₈, wie etwa Pentaerythritdiacrylat-Monostearat, und deren Mischungen. Die acrylierten Monomere sind gegenüber den methacrylierten Monomeren bevorzugt, insbesondere sind die zuvor genannten acrylierten Monomere bevorzugt. In einer Ausführungsform der vorliegenden Erfindung ist Komponente (B) eine Mischung aus Octadecylacrylat und Pentaerythritdiacrylat-Monostearat.

Die optionale Komponente (C) der erfindungsgemäß verwendeten Schlicker ist ein Wachs. In der vorliegenden Erfindung ist der Begriff "Wachs" so zu verstehen, wie er von der Deutschen Gesellschaft für Fettwissenschaft in der DGF-Einheitsmethode M-I 1 (75) festgelegt wurde. Da die chemische Zusammensetzung und Herkunft verschiedener Wachse sehr unterschiedlich ist, definiert man Wachse nur über ihre mechanisch-physikalischen Eigenschaften. Ein Stoff wird als Wachs bezeichnet, wenn er bei 20 °C knetbar, fest bis brüchig hart, eine grobe bis feinkristalline Struktur aufweist, farblich durchscheinend bis opak, jedoch nicht glasartig ist; über 40 °C ohne Zersetzung schmilzt, schon wenig oberhalb des Schmelzpunktes leicht flüssig (niedrigviskos) und nicht fadenziehend ist; eine stark temperaturabhängige Konsistenz und Löslichkeit aufweist, sowie unter leichtem Druck polierbar ist. Typischerweise gehen Wachse zwischen 40 und 130 °C in den schmelzflüssigen Zustand über; Wachse sind in der Regel wasserunlöslich. Vorzugsweise haben Wachse zur Verwendung in dem erfindungsgemäßen Schlicker einen Schmelzpunkt im Bereich von 40 bis kleiner 80 °C, besonders bevorzugt von 45 bis 65 °C und ganz besonders bevorzugt von 54 bis 56 °C. Bevorzugte Wachse haben bei 80 °C und einer Scherrate von 1000 s⁻¹ eine Viskosität von ≤ 10 mPa·s, insbesondere von 5 bis 10 mPa·s und besonders bevorzugt von 3 bis 4 mPa·s.

Je nach ihrer Herkunft teilt man Wachse in drei Hauptgruppen ein: natürliche Wachse, wobei hier wiederum zwischen pflanzlichen und tierischen Wachsen, Mineralwachsen und petrochemischen Wachsen unterschieden wird; chemisch modifizierte Wachse und synthetische Wachse. Das als Komponente (C) in dem erfindungsgemäßen Schlicker eingesetzte Wachs kann aus einer Wachsart oder auch aus Mischungen verschiedener Wachsarten bestehen. In der vorliegenden Erfindung werden bevorzugt petrochemische Wachse, wie etwa Paraffinwachs (Hartparaffin), Petrolatum, Mikrowachs (Mikroparaffin) und deren Mischungen, besonders bevorzugt Paraffinwachs verwendet. Gut geeignet sind Paraffinwachse, die als Spritzgussbinder zur Fertigung von oxidkeramischen und nichtoxidkeramischen Bauteilen im Heißgießverfahren (Niederdruckspritzguss) kommerziell erhältlich sind, z. B. Paraffinwachs mit einem Schmelzpunkt ca. 54-56 °C, einer Viskosität von 3-4 mPa·s bei 80 °C und einer Scherrate von 1000 s⁻¹, das u.a. von Zschimmer & Schwarz (Lahnstein, DE) unter der Bezeichnung SILIPLAST bezogen werden kann. Häufig enthalten kommerziell erhältliche Wachse bereits Emulgatoren und/oder weitere Komponenten zur Anpassung der Rheologie.

Als Wachskomponente (C) können auch pflanzliche Wachse, z.B. Candelillawachs, Carnaubawachs, Japanwachs, Espartograswachs, Korkwachs, Guarumawachs, Reiskeimölwachs, Zuckerrohrwachs, Ouricurywachs, Montanwachs; tierische Wachse, z.B. Bienenwachs, Schellakwachs, Walrat, Lanolin (Wollwachs), Bürzelfett; Mineralwachse, z.B. Ceresin, Ozokerit (Erdwachs); chemisch modifizierte Wachse, z.B. Montanesterwachse, Sasolwachse, hydrierte Jojobawachse, oder synthetische Wachse, z.B. Polyalkylenwachse, Polyethylenglykolwachse, verwendet werden.

Zusätzlich oder vorzugsweise alternativ zur Komponente (C) können Emulgatoren (Komponente (D)) verwendet werden, in einer besonders bevorzugten Zusammensetzung werden Glyceride von Fettsäuren und insbesondere Polypropylengycole verwendet. Die Polypropylenglycole weisen hierbei vorzugsweise eine Kettenlänge von 100 bis 1000, besonders bevorzugt 100 bis 600, ganz besonders bevorzugt 200 bis 400 auf. Der Emulgator D wird vorzugsweise in einer Menge von 0,5 bis 10 Vol.-%, ganz besonders bevorzugt 1 bis 5 Vol.-% eingesetzt, jeweils bezogen auf die Gesamtmasse des Schlickers.

Vorzugsweise enthalten die Schlicker als Komponente (E) einen Polymerisationsinitiator.

Geeignete Polymerisationsinitiatoren sind radikalische Polymerisationsinitiatoren, insbesondere Photoinitiatoren. Es können die bekannten radikalischen Photoinitiatoren für den sichtbaren Bereich (vgl. J.P. Fouassier, J.F. Rabek (Hrsg.), Radiation Curing in Polymer Science and Technology, Vol. II, Elsevier Applied Science, London und New York 1993) verwendet werden, wie z.B. Acyl- oder Bisacylphosphinoxide, vorzugsweise α-Diketone, wie 9,10-Phenanthrenchinon, Diacetyl, Furil, Anisil, 4,4'-Dichlorbenzil und 4,4'-Dialkoxybenzil und Campherchinon. Zur Beschleunigung der Initiierung werden α-Diketone vorzugsweise in Kombination mit aromatischen Aminen verwendet. Redoxsysteme, die sich besonders bewährt haben, sind Kombinationen aus Campherchinon mit Aminen, wie N,N-Dimethyl-p-toluidin, N,N-Dihydroxyethyl-p-toluidin, 4-Dimethylaminobenzoesäureethylester oder strukturverwandte Systeme.

Besonders bevorzugte Photoinitiatoren sind Norrish-Typ-I-Photoinitiatoren, vor allem Monoacyltrialkyl- oder Diacyldialkylgermanium-Verbindungen, wie z.B. Benzoyltrimethylgermanium, Dibenzoyldiethylgermanium oder Bis(4-methoxybenzoyl)diethylgermanium. Dabei lassen sich auch Mischungen der verschiedenen Photoinitiatoren einsetzen, wie z.B. Dibenzoyldiethylgermanium in Kombination mit Campherchinon und 4-Dimethylaminobenzoesäureethylester.

Der Polymerisationsinitiator (E) wird in einer Menge von 0,001 bis 3,0 Vol.-%, bevorzugt von 0,01 bis 1 Vol.-%, ganz besonders bevorzugt von 0,05 bis 0,8 Vol.-% eingesetzt, jeweils bezogen auf die Gesamtmasse des Schlickers.

Neben den zuvor genannten Komponenten können die Schlicker optional weitere Additive (F), wie etwa Stabilisatoren (Inhibitoren), Dispergierhilfsmittel, schmelzviskositätserniedrigende Substanzen (Komponente zur Anpassung der Rheologie) und deren Kombinationen, enthalten. Diese werden in einer Menge von 0,01, bis 5 Vol.-% den Schlickern zugesetzt.

Die Stabilisatoren (Inhibitoren) verbessern die Lagerstabilität der Schlicker und verhindern darüber hinaus eine unkontrollierte Polyreaktion. Die Inhibitoren werden vorzugsweise in einer solchen Menge zugesetzt, dass die Schlicker über einen Zeitraum von ca. 2 bis 3 Jahre lagerstabil sind. Beispiele für geeignete Inhibitoren umfassen das 2,2,6,6-Tetramethyl-piperindin-1-oxyl-Radikal (TEMPO), Phenothiazin, Iod und Cupfer-(I)-iodid Bevorzugt werden die Inhibitoren in einer Menge von 5 bis 500 Gew.-ppm, besonders bevorzugt 50 bis 200 Gew.-ppm eingesetzt, jeweils bezogen auf die Gesamtmasse des(der) Monomers(e). Bezogen auf die Gesamtzusammensetzung des Schlickers werden die Inhibitoren vorzugsweise in einer Menge von 0,03 bis 3 Vol.-%, vorzugsweise 0,3 bis 1,2 Vol.-% eingesetzt.

Als Dispergierhilfsmittel können alle üblichen Dispergierhilfsmittel zum Dispergieren von oxidischen Teilchen in einem unpolaren Medium eingesetzt werden. Typischerweise weisen geeignete Dispergierhilfsmittel ein polare "Ankergruppe", die an der Partikeloberfläche gebunden werden kann, und eine unpolare, vom Partikel weg weisende Gruppe, die eine maximale sterische Stabilisierunug der Suspension bewirkt, auf. Bevorzugte Dispergierhilfsmittel sind Dispergierhilfsmittel auf Polyesterbasis, wie z. B. Hypermer LP-1 von Uniqema, GB. Das Dispergierhilfsmittel wird vorzugsweise in einer Menge von 0,1 bis 5 Gew.-%, vorzugsweise 0,5 bis 2 Gew.-% und insbesondere 1,1 bis 1,5 Gew.-% eingesetzt, jeweils bezogen auf die Gesamtmasse an Keramikpartikeln. Bezogen auf die Gesamtzusammensetzung des Schlickers werden Dispergierhilfsmittel vorzugsweise in einer Menge von 0,3 bis 16 Vol.-%, vorzugsweise 1,6 bis 6,4 Vol.-% und insbesondere 2.0 bis 4,8 Vol.-% eingesetzt.

Der Gesamtmenge der Komponente(n) (F) beträgt vorzugsweise 0,1 bis 15 Vol.-%, besonders bevorzugt 0,1 bis 10 Vol.-%, ganz besonders bevorzugt 0,5 bis 9 Vol.-% und insbesondere 1,5 bis 5 Vol.-% bezogen auf die Gesamtzusammensetzung des Schlickers.

Eine schmelzviskositätserniedrigende Substanz kann zu dem erfindungsgemäßen Schlicker gegeben werden, um dessen Viskosität im flüssigen Zustand zu erniedrigen. Hierzu geeignet sind beispielsweise längerkettige (C₈-C₂₀), bei Raumtemperatur feste Olefine mit niedrigem Schmelzpunkt, wie etwa Hexadecen und Octadecen.

Üblicherweise haben wachshaltige Schlicker bei 20 °C eine pastöse bis feste Konsistenz. So wird eine Sedimentation der Keramikpartikel vermieden und eine hohe Lagerstabilität gewährleistet. Bei 80 °C und einer Scherrate von 1000 s⁻¹ hat er vorzugsweise eine Viskosität von ≤ 200 mPa·s, besonders bevorzugt ≤ 100 mPa·s. Der erfindungsgemäße Schlicker kann vorzugsweise bei entsprechender Temperatur mit einem Inkjet-Drucker, der eine Druckkopfdüse mit einem Durchmesser von etwa 100 µm aufweist, verdruckt werden.

Die Schlicker können durch Dispergieren der Keramikpartikel in dem Bindemittel, z.B. einem Gemisch aus Wachs, Monomeren und optionalen Additiven, hergestellt werden. Das Dispergieren erfolgt vorzugsweise bei einer Temperatur, bei der das Wachs und vorzugsweise auch die Monomere flüssig sind, vorzugsweise bei 70 bis 110 °C. Gemäß einer weiter bevorzugten Ausführungsform erfolgt das Dispergieren unter Anwendung hoher Scherraten, beispielsweise bei 500 bis 5.000 s⁻¹. Der Füllstoff kann beispielsweise unter Verwendung eines Dissolvers (z. B. Dispermat® der Fa. VMA-Getzmann GmbH, Reichshof, DE) bei Drehzahlen von bis zu 3.000/min, und vorzugsweise bei erhöhter Temperatur von 70 bis 110 °C in dem Gemisch aus Wachs, Monomeren und optionalen Additiven dispergiert werden. Unter diesen Bedingungen werden Agglomerate der bevorzugten Keramikpulver weitgehend in die Primärpartikel zerlegt. Falls die Viskosität im flüssigen Schlicker zu hoch sein sollte, wird sie durch Zugabe von viskositätserniedrigenden Substanzen auf Werte von vorzugsweise ≤ 200 mPa·s reduziert, besonders bevorzugt ≤ 100 mPa·s, gemessen bei einer Scherrate von 1000 s⁻¹ und einer Temperatur von 80 °C.

Die wachsfreien Tinten unterscheiden sich von den wachshaltigen dadurch, dass sie sich nicht durch Auskühlen auf Raumtemperatur verfestigen und somit bei Raumtemperatur flüssig sind. Die Herstellung kann z.B. bei Temperaturen von 40 bis 60 °C unter Verwendung eines Dissolvers (z.B. Dispermat® der Fa. VMA-Getzmann GmbH, Reichshof, D) bei Drehzahlen von bis zu 3.000/min erfolgen. Die Tinten weisen bei Raumtemperatur vorzugsweise eine Viskosität von ≤ 5.000 mPas und insbesondere von ≤ 500 mPa·s auf, bei Erhöhung der Temperatur auf 40 bis 90 °C erniedrigt sich diese vorzugsweise auf ≤ 200 mPa·s, gemessen bei einer Scherrate von 1000 s⁻¹.

Gemäß einem besonders bevorzugten Verfahren zur Herstellung der Schlicker werden die Keramikpartikel zunächst in einem Turbularmischer (z.B. Typ T2C der Fa. Willy. A. Bachhofen AG Maschinenfabrik, Muttenz, CH) gemischt und diese Mischung dann im Dissolver unter den oben aufgeführten Bedingungen aufbereitet, um eine effektive Deagglomeration der Partikel zu erzielen. Anschließend wird die homogenisierte Mischung in einem weiteren Misch- und Homogenisierungsschritt mit den Komponenten B und ggf. C bis F auf den zum Verdrucken notwendigen Feststoffgehalt verdünnt und mit dem Dissolver oder einer anderen Mischapparatur zu einer homogenen Mischung verarbeitet, beispielweise durch Mischen für 10 Minuten bei Drehzahlen von bis zu 3000/min im SpeedMixer DAC400FVZ (Fa. Hauschild & Co KG, Hamm, D).

Wachshaltige Schlicker werden vorzugsweise bei einer Temperatur im Bereich von 60 °C bis 140 °C, besonders bevorzugt von 70 °C bis 120 °C und ganz besonders bevorzugt von 80 °C bis 100 °C verdruckt, wobei damit die Temperatur in der Druckdüse gemeint ist. Unmittelbar nach Auftreffen der Tropfen auf die Bauplattform bzw. auf bereits aufgedruckte Schichten härten die gedruckten Tropfen, da sich der im Schlicker enthaltene Wachsanteil verfestigt. Die Temperatur der Bauplattform liegt hierbei vorzugsweise im Temperaturbereich von 20 °C bis 100 °C, besonders bevorzugt von 20 °C bis 70 °C, ganz besonders bevorzugt von 20 °C bis 40 °C. Durch die Temperaturdifferenz zwischen Drucktemperatur und Temperatur der Plattform lässt sich der Härtungsvorgang kontrollieren. Zusätzlich wird jede Schicht durch Polymerisation gehärtet und durch das dadurch entstehende Polymernetzwerk der Formkörper über das gesamte Volumen verfestigt. Die Härtung durch Polymerisation kann schichtweise oder vorzugweise parallel zum Verdrucken erfolgen. Im zweiten Fall wird jeder Tropfen unmittelbar nach dem Verdrucken beispielweise durch Bestrahlen mit Licht gehärtet.

Wachsfreie Schlicker werden vorzugsweise bei einer Temperatur im Bereich von 40 °C bis 140 °C, besonders bevorzugt von 50 °C bis 120 °C und ganz besonders bevorzugt von 60 °C bis 110 °C verdruckt. Vorzugsweise wird nach Auftreffen der Tropfen auf die Bauplattform bzw. auf bereits aufgedruckte Schichten, jeder Tropfen durch Polymerisation gehärtet. Alternativ kann die Härtung schichtweise erfolgen. Die Temperatur der Bauplattform liegt hierbei vorzugsweise im Bereich von 20 °C bis 100 °C, besonders bevorzugt von 20 °C bis 70 °C, ganz besonders bevorzugt von 20 °C bis 40 °C.

Nach Abschluss des Druckprozesses wird ggf. das Stützmaterial mechanisch oder chemisch entfernt. Die Formkörper werden anschliessend chemisch und/oder thermisch entbindert und abschliessend gesintert.

Die Entbinderung (d) dient zur Entfernung des temporären Bindemittels und gegebenenfalls vorhandener Wachse und Additive aus dem Grünkörper. Besonders bevorzugt erfolgt das Entfernen des Stützmaterials zusammen mit der Entbinderung des Grünlings. Durch die Entbinderung wird aus dem Grünling der Weissling.

Stützmaterial und Bindemittel können vorzugsweise thermisch z.B durch Schmelz-, Verdampfungs- oder Verbrennungsprozesse entfernt werden. Hierzu wird der Grünling vorzugsweise auf eine Temperatur von 50 °C bis 600 °C, besonders bevorzugt .von 60 °C bis 500 °C und ganz besonders bevorzugt von 150 °C bis 500 °C erhitzt. Das Erhitzen erfolgt vorzugsweise für einen Zeitraum von für 3 h bis 7 h.

Der erhaltene Weißling wird in Schritt (e) zu einem dichten keramischen Formkörper gesintert. Die Sinterung der Weißlinge aus Y-TZP und ATZ-Keramiken erfolgt im Sinterofen, vorzugsweise bei Temperaturen zwischen 1200 °C und 1700 °C, bevorzugt zwischen 1300 °C und 1600 °C, besonders bevorzugt zwischen 1350 °C und 1500 °C. Weisslinge aus Glas- oder Glaskeramikpulvern werden vorzugsweise bei Temperaturen im Bereich von 500 °C und 1200 °C, besonders bevorzugt zwischen 600 °C und 1000 °C, besonders bevorzugt zwischen 700 °C und 900 °C gesintert. Die Sinterzeit beträgt vorzugsweise 2 h bis 6 h, besonders bevorzugt in 4 h bis 5,5 h.

Bei der Sinterung (e) handelt es sich um einen Hochtemperaturprozess, der dazu dient den Formkörper möglichst porenfrei zu verfestigen. Hierbei finden Materialumlagerungs- und Kornwachstumsprozesse statt (bei Oxidkeramiken vorwiegend durch Diffusion), durch die die einzelnen keramischen Partikel sich zueinander "bewegen" und ein dichtes, festes und porenfreies Gefüge bilden. Der Sintervorgang führt zu einer Verdichtung von bevorzugt > 98%, bevorzugt > 98,5% und ganz besonders bevorzugt > 99% der theoretischen Dichte der Keramik.

In einer besonders bevorzugten Ausführungsform erfolgt die Entbinderung und Sinterung in einem einstufigen Prozess im Temperaturbereich zwischen 20 °C und 1700 °C, bevorzugt zwischen 20 °C und 1600 °C, besonders bevorzugt zwischen 20 °C und 1500 °C. Die Dauer des einstufigen thermischen Prozesses beläuft sich hierbei auf 2 h bis 12 h, bevorzugt auf 4 h bis 10 h, besonders bevorzugt auf 6 h bis 10 h.

Der Formkörper erfährt durch die Entbinderung und Sinterung eine Volumenschwindung, die abhängig vom Füllgrad unterschiedlich ausfällt. Diese Volumenschwindung wird vorab durch eine Überdimensionierung des zu druckenden Formkörpers berücksichtigt, um die Passgenauigkeit des entbinderten und gesinterten Bauteils zu gewährleisten. Für eine z.B. 36 Vol.-%ige-Tinte beträgt die Schwindung 64 %, dass heisst ein 90 pl grosser Tropfen generiert letztendlich ein Volumen von rechnerisch 32 pl im gesinterten Bauteil, was gleichbedeutend mit der generierbaren Voxelgrösse (voxel = volumetric pixel = Volumenelement in einem dreidimensionalen Raum) des gesinterten keramischen Bauteils ist. Das Tropfenvolumen gibt dabei die kleinste generierbare Voxelgrösse vor.

Das erfindungsgemässe 3D Ink-Jet Druckverfahren von keramischen Schlickern ermöglicht bei der Verwendung mehrerer Druckköpfe, die aus mit unterschiedlich zusammengesetzten, d.h. z.B. unterschiedlich eingefärbten Schlickern gefüllten Reservoiren gespeist werden, die Herstellung von individualisierten, dreidimensional Material- und/oder farblich gradierten keramischen Grünkörpern, die dann zu keramischen Körpern dicht gesintert werden können. Das erfindungsgemäße Verfahren eignet sich zur Herstellung von beliebigen Keramikformteilen. Eine bevorzugte Anwendung des Verfahrens ist die Herstellung von dentalen Restaurationen, wie Brücken, insbesondere Brückengerüsten, Inlays, Onlays, Kronen, Implantaten, Abutments und Veneers. Die Anwendung dieses Verfahrens mit einer farblichen Gradierung ermöglicht es dem Zahntechniker oder Zahnarzt, mittels einer automatisierten Fertigung das individuelle farbliche Design des Zahnersatzes herzustellen.

Bei der Herstellung von Dentalrestaurationen mittels bekannter CAD/CAM-Verfahren werden die virtuell konstruierten dentalen Gerüste aus konfektionierten Rohlingen gefräst oder geschliffen. Diese konfektionierten Rohlinge bestehen zu 100% aus einem Material, meist aus teilgesintertem Y-TZP. Dieses Y-TZP weist im gesinterten Zustand eine Bruchfestigkeit von über 900 MPa auf. Aufgrund dieser mechanischen Eigenschaften ergeben sich die hierdurch erforderlichen Mindestwand- und Verbinderdicken, die vom Materiallieferanten vorgegeben werden und die bei der automatisierten Herstellung des Zahnersatzes über die Frästechnik berücksichtigt werden. Als "Verbinder" gilt der Verbindungssteg zwischen Kronen und/oder Brückengliedern bei Brücken mit mehr als zwei Elementen, wie z.B. bei 8 und 9 in Fig.4 zu sehen ist. Diese Werte sind in die zur virtuellen Konstruktion des Zahnersatzes verwendete CAD-Software implementiert und werden nicht unterschritten.

Erfindungsgemäß wird durch die gezielte Verstärkung von dentalkeramischen Gerüsten mit Werkstoffen höherer Festigkeit eine erhöhte mechanische Zuverlässigkeit der Bauteile erzielt und dadurch deren Bruchwahrscheinlichkeit reduziert. Auf der anderen Seite ermöglicht die Anwendung des erfindungsgemäßen Verfahrens aber auch die Brückenverbindungsstege graziler zu gestalten, ohne die mechanische Belastbarkeit zu beeinträchtigen. Dadurch können die Ansprüche an die Ästhetik des zu fertigenden vollkeramischen Zahnersatzes erhöht werden, weil nun eine deutlich verbesserte Vereinzelung zwischen Pfeilerkrone und Brückenglied ermöglicht wird.

Das erfindungsgemäße Verfahren erlaubt es erstmals, auf wirtschaftliche Weise Dentalrestaurationen herzustellen, die sowohl in ästhetischer als auch in mechanischer Hinsicht befriedigen. Dies wird dadurch erreicht, dass die optischen und mechanischen Eigenschaften durch das gleichzeitige Verdrucken mehrerer Tinten in unterschiedlichen Bereichen des Formkörpers gezielt eingestellt werden können. Durch die Kombination z.B. von Y-TZP mit dem weniger transluzenten aber dafür mechanisch belastbarerem ATZ zur gezielten Verstärkung von kritischen Bereichen lassen sich sowohl in mechanischer als auch in optischer Hinsicht zufriedenstellende Restaurationen herstellen. Die Restaurationen zeichnen sich dadurch aus, dass sich mehrere Materialeigenschaften, wie z.B. die optischen und mechanischen Eigenschaften, jeweils räumlich graduell ändern, wobei die Gradienten in der Regel nicht parallel verlaufen. Hierdurch ist im ästhetisch besonders kritischen Frontzahnbereich eine grazilere Gestaltung der Verbindungsstege möglich, die eine deutlichere Separierung der Einzelzähne auch nach einer optionalen Verblendung mit glaskeramischen Verblendmassen erlaubt. Bei der Anwendung des erfindungsgemässen Verfahrens im mechanisch besonders beanspruchten Seitenzahnbereich wird eine höhere Bauteilfestigkeit und -zuverlässigkeit erreicht ohne die optischen Eigenschaften zu vernachlässigen.

Das erfindungsgemäße Verfahren umfasst gemäß einer weiteren Ausführungsform auch das Verblenden des gesinterten Formkörpers, z.B. eines Grundgerüsts für eine dentale Brücke, vorzugsweise mit einer glaskeramischen Verblendmasse. Die Verblendung erfolgt mit den klassischen Methoden wie manuelle Schichttechnik, Überpressen oder durch CAD/CAM-Verfahren wie in DE 10 2005 023 105 und DE 10 2005 023 106 beschrieben.

Gemäß einer besonders bevorzugten Ausführungsform des erfindungsgemäße Verfahrens wird die Verblendung als separater Formkörper auf die oben beschriebene Weise unter Verwendung eines Schlickers hergestellt, der als Komponente (A) Glaskeramikpartikel enthält. Die Verblendung wird nach dem Drucken entbindert, gesintert und dann mit dem zu verblendenden Grundgerüst verbunden, beispielsweise verklebt. Auf diese Weise lässt sich die hohe mechanische Belastbarkeit einer Oxidkeramik, die vorzugsweise zur Herstellung des Grundgerüsts eingesetzt wird, mit den hervorragenden optischen Eigenschaften einer Glaskeramik, die bevorzugt für die Verblendung eingesetzt wird, kombinieren. Das gleichzeitige Verdrucken von Oxid- und Glaskeramik ist erfindungsgemäß nicht bevorzugt, da das Sintern solcher Mischungen zu unbefriedigenden Ergebnissen führt.

Die Herstellung eines kompletten Brückengerüstes aus ATZ-Keramik ist ebenfalls möglich, jedoch weisen ATZ-Keramiken im Vergleich zum Y-TZP eine geringere Transluzenz auf, so dass sich derartige Keramiken aus ästhetischen Gründen für den Frontzahnbereich weniger bevorzugt sind.

Zur Herstellung eines Formkörpers wird ein Modell der räumlichen Verteilung der zwei oder mehr Schlicker in dem Formkörper erstellt und dann die zwei oder mehr Schlicker in der durch die räumliche Verteilung vorgegebenen Weise an jedem Punkt (x,y,z) des Raumes ausgegeben. Dieses Modell kann ein dreidimensionales Computermodell, d.h. ein Datensatz oder eine Abbildung sein, wodurch jedem Punkt (x,y,z) oder jedem Voxel eine bestimmte Zusammensetzung aus einem oder mehreren Schlickern zugewiesen wird. Dieser Datensatz oder diese Abbildung wird zur Steuerung des erfindungsgemäßen Verfahrens verwendet, d.h. der Formkörper wird z.B. auf der Basis eines dreidimensionalen Computermodells des Formkörpers computergesteuert erzeugt.

Zur Herstellung eines gradierten dentalkeramischen Zahnersatzes mittels 3 D Druckverfahren wird hierzu beispielsweise zunächst die Mundsituation anhand eines Scans an einem Gipsmodell oder mittels eines Interoral-Scans digital erfasst. Bei der interoralen Erfassung der Mundsituation wird zur Überprüfung der Passung vorzugsweise auch ein Meistermodell mit Hilfe einer automatisierten Fertigungstechnologie erstellt (durch Fräsen, Stereolithographie, oder Ink-Jet Printing). Anhand der digitalen 3D Scan-Daten wird das zu erstellende Brückengerüst mit einer CAD-Software konstruiert. Die Konstruktion des Brückengerüstes erfolgt hierbei gemäss den materialspezifischen Vorgaben in Hinsicht auf die numerische Kompensation der Sinterschwindung, der Mindestwand- und Verbinderdicken.

Das Ausgabeformat des konstruierten Brückengerüstes ist ein Dateiformat, dem zusätzliche Attribute wie z.B. Farbinformationen zugewiesen werden können (z.B. IGES-Format, Nurbs). Dieses wird, bevor es zum Drucker gesendet wird, "gesliced", d.h. die dreidimensionale virtuelle Konstruktion wird in Scheiben "geschnitten". Die Höhe der jeweiligen Scheibe entspricht dabei der Schichthöhe während des Aufbau- bzw. Druckprozesses, die lateralen Ausdehnung entsprechend den jeweiligen lateralen Ausdehnungen des konstruierten Bauteils in der jeweiligen Position in z-Richtung. Die Brücke wird nun lagenweise durch aufeinander folgendes Drucken der einzelnen Schichten (Scheiben) aufeinander aufgebaut. Der so erhaltende Grünkörper wird dann wie beschrieben entbindert und gesintert.

Die Erfindung wird nun anhand von Figuren und Ausführungsbeispielen näher erläutert.
Fig. 1 zeigt schematisch die Bildung einer Schicht 1 eines Formkörpers auf einer Bauplattform (Träger) 2 mit einem Ink-jet-Druckkopf 3. Der Druckkopf weist zwei Druckkopfbündel 4 und 5 auf. Den Druckkopfbündeln ist jeweils ein Reservoir 6 bzw. 7 zugeordnet, das mit Schlicker A bzw. Schlicker B gefüllt ist.
Fig. 2 zeigt schematisch die in Fig. 1 erzeugte Schicht in Draufsicht.
Fig. 3 zeigt schematisch einen gedruckten, würfelförmigen Formkörper dessen Zusammensetzung vom sphärischen Kern aus dem Material B (100 % Material B) zum Rand hin kontinuierlich in das Material A übergeht (100 % Material A).
Fig. 4 zeigt eine schematische Darstellung eines bei 8 und 9 (Verbindungsstege) verstärkten Brückengerüstes für eine dentale Brücke.

### Beispiel 1

### Wachshaltige Schlickerzusammensetzung

Es wurden zwei unterschiedliche Schlicker durch Mischen der in der folgenden Tabelle angegebenen Komponenten hergestellt. Diese Schlicker eignen sich zur gemeinsamen Anwendung in dem erfindungsgemäßen Verfahren.

| ***Komponenten Schlicker A*** | ***Vol.%*** | ***Gew.-%*** |
|---|---|---|
| **Y-TZP¹⁾** | 34,00 Vol.-% | 76,84 Gew.-% |
| **Paraffinwachs³⁾** | 39,77 Vol.-% | 13,59 Gew.-% |
| **Hypermer LP1⁴⁾** | 3,22 Vol.-% | 1,08 Gew.-% |
| **Octadecen** | 1,91 Vol.-% | 0,56 Gew.-% |
| **PPG 400 DA⁵⁾** | 16,75 Vol.-% | 6,22 Gew.-% |
| **DCP⁶⁾** | 2,01 Vol.-% | 0,80 Gew.-% |
| **SR202⁷⁾** | 1,99 Vol.-% | 0,80 Gew.-% |
| **Irgacure 184⁸⁾** | 0,24 Vol.-% | 0,08 Gew.-% |
| **Irgacure 819⁹⁾** | 0,12 Vol.-% | 0,04 Gew.-% |
| **TEMPO¹⁰⁾** | 0,002 Vol.-% | 0,001 Gew.-% |

| ***Komponenten Schlicker B*** | ***Vol.%*** | ***Gew.-%*** |
|---|---|---|
| **Y-TZP¹⁾** | 25,83 Vol.-% | 62,37 Gew.-% |
| **Al₂O₃²⁾** | 8,17 Vol.-% | 12,89 Gew.-% |
| **Paraffinwachs³⁾** | 39,54 Vol.-% | 14,44 Gew.-% |
| **Hypermer LP1⁴⁾** | 3,46 Vol.-% | 1,23 Gew.-% |
| **Octadecen** | 1,91 Vol.-% | 0,60 Gew.-% |
| **PPG 400 DA⁵⁾** | 16.65 Vol.-% | 6,60 Gew.-% |
| **DCP⁶⁾** | 2,06 Vol.-% | 0,88 Gew.-% |
| **SR202⁷⁾** | 2,04 Vol.-% | 0,88 Gew.-% |
| **Irgacure 184⁸⁾** | 0,23 Vol.-% | 0,08 Gew.-% |
| **Irgacure 819⁹⁾** | 0,11 Vol.-% | 0,04 Gew.-% |
| **TEMPO¹⁰⁾** | 0,002 Vol.-% | 0,001 Gew.-% |

| | | |
|---|---|---|
| Erläuterung: ¹⁾ TZ-3YS-E (commercial grade) von Tosoh Corporation, Tokyo, JP (mit Y₂O₃ stabilisiertes ZrO₂, Primärteilchengröße 300-350nm) ²⁾ TM-DAR von Taimei Chemicals CO.LTD. Tokyo, JP (α-Al₂O₃ > 99.99%, Primärteilchengrösse 100nm) ³⁾ Schmelzpunkt 54-56 °C, Viskosität (bei 80 °C und einer Scherrate von 1000 s₋₁) 3-4 mPa·s (Siliplast; Zschimmer & Schwarz, Lahnstein, DE; enthält insges. ca. 0,5 % Emulgator) ⁴⁾ Dispergierhilfsmittel auf Basis eines mittelkettigen Polyesters (Uniqema, GB.) ⁵⁾ Polypropylenglykol-400-diacrylat ⁶⁾ Tricyclodecandimethanol-Dimethacrylat ⁷⁾ Diethyelnglycol-Dimethacrylat ⁸⁾ 1-Hydroxy-cyclohexylphenyl-keton ⁹⁾ Phosphine oxide, phenyl bis (2,4,6-trimethyl benzoyl) ¹⁰⁾ 2,2,6,6-Tetramethylpiperidinyloxyl | | |

### Beispiel 2

### Wachsfreie Schlickerzusammensetzung

Es wurden zwei unterschiedliche Schlicker durch Mischen der in der folgenden Tabelle angegebenen Komponenten hergestellt. Diese Schlicker eigenen sich zur gemeinsamen Anwendung in dem erfindungsgemäßen Verfahren.

| ***Komponenten Schlicker C*** | ***Vol.%*** | ***Gew.-%*** |
|---|---|---|
| **Y-TZP¹⁾** | 34,00 Vol.-% | 75,96Gew.-% |
| **Disperbyk 111¹¹⁾** | 3,24 Vol.-% | 1,07 Gew.-% |
| **PPG200¹²⁾** | 17,59 Vol.-% | 6,46 Gew.-% |
| **Octadecen** | 1,92 Vol.-% | 0,55 Gew.-% |
| **PPG 400 DA⁵⁾** | 38,32 Vol.-% | 14,06 Gew.-% |
| **DCP⁶⁾** | 2,12 Vol.-% | 0,83 Gew.-% |
| **SR202⁷⁾** | 2,10 Vol.-% | 0,83 Gew.-% |
| **Irgacure 184⁸⁾** | 0,48 Vol.-% | 0,16 Gew.-% |
| **Irgacure 819⁹⁾** | 0,24 Vol.-% | 0,08 Gew.-% |
| **TEMPO¹⁰⁾** | 0,005 Vol.-% | 0,002 Gew.-% |

| ***Komponenten Schlicker D*** | ***Vol.%*** | ***Gew.-%*** |
|---|---|---|
| **Y-TZP¹⁾** | 25,82 Vol.-% | 61,59 Gew.-% |
| **Al₂O₃²⁾** | 8,18 Vol.-% | 12,76 Gew.-% |
| **Disperbyk 111¹¹⁾** | 3,44 Vol.-% | 1,21 Gew.-% |
| **PPG200¹²⁾** | 22,18 Vol.-% | 8,69 Gew.-% |
| **Octadecen** | 1,90 Vol.-% | 0,59 Gew.-% |
| **PPG 400 DA⁵⁾** | 33,57 Vol.-% | 13,15 Gew.-% |
| **DCP⁶⁾** | 2,15 Vol.-% | 0,90 Gew.-% |
| **SR202⁷⁾** | 2,12 Vol.-% | 0,90 Gew.-% |
| **Irgacure 184⁸⁾** | 0,42 Vol.-% | 0,15 Gew.-% |
| **Irgacure 819⁹⁾** | 0,21 Vol.-% | 0,07 Gew.-% |
| **TEMPO¹⁰⁾** | 0,004 Vol.-% | 0,002 Gew-% |

| | | |
|---|---|---|
| Erläuterung: ¹¹⁾ Dispergierhilfsmittel, Copolymer mit sauern Gruppen(Byk Chemie, D) ¹²⁾ Polypropylenglycol 200 (andere siehe Beispiel 1) | | |

### Beispiel 3

### Herstellung eines Formkörpers

Die Tinte A aus Beispiel 1 wurde unter folgenden Parametern in Piezo-DoD-Multi-Nozzle Druckköpfen (E1 GEN3, Fa. Ricoh, Simi Valley, Kalifornien, USA) verdruckt:

**Druckparameter**

| Temperatur Reservoir in °C | Temperatur Druckkopf in °C | Frequenz in kHz | Spannung in Volt | Unterdruck in mbar |
|---|---|---|---|---|
| 90 | 90 | 10 | 37 | 10 |

Der Grünkörper wurde anschließend unter den folgenden Bedingungen entbindert und gesintert:

**Entbinderparameter (Linn Entbinderungsofen):**

| Starttemperatur in °C | Zieltemperatur in °C | Heiz-Kühlrate in K/min | Haltezeit in min |
|---|---|---|---|
| 20 | 180 | 10 | |
| 180 | 250 | 0.5 | |
| 250 | 500 | 5 | |
| 500 | | | 60 |
| 500 | 20 | 10 | |

| | | | |
|---|---|---|---|
| Gesamtdauer: 5 h 14 min | | | |

**Sinterparameter (Nabertherm Sinterofen):**

| Starttemperatur in °C | Zieltemperatur in °C | Heiz-Kühlrate in K/min | Haltezeit in min |
|---|---|---|---|
| 20 | 1400 | 5 | |
| 1400 | | | 120 |
| 1400 | 20 | 10 | |

| | | | |
|---|---|---|---|
| Gesamtdauer: 8 h 54 min | | | |

Alternativ wurden die Entbinderung und Sinterung in einem Prozessschritt unter den folgenden Bedingungen durchgeführt:

**Endbinder- und Sinterparameter (Nabertherm Sinterofen):**

| Starttemperatur in °C | Zieltemperatur in °C | Heiz-Kühlrate in K/min | Haltezeit in min |
|---|---|---|---|
| 20 | 180 | 10 | |
| 180 | 250 | 1 | |
| 250 | 500 | 5 | |
| 500 | | | 120 |
| 500 | 1400 | 5 | |
| 1400 | | | 60 |
| 1400 | 20 | 10 | |

| | | | |
|---|---|---|---|
| Gesamtdauer: 10h 34 min | | | |

## Patentansprüche

1. Verfahren zur generativen Herstellung eines Formkörpers bei dem man
(a) Keramikschlicker schichtweise auf einen Träger aufbringt und härtet,
(b) man auf die gehärtete Schicht eine weitere Schicht aufbringt und härtet,
(c) man Schritt (b) so oft wiederholt, bis man einen Körper mit der gewünschten geometrischen Form hat,
(d) man dann den Körper einer chemischen Behandlung oder einer Wärmebehandlung zur Entfernung des Bindemittels (Entbinderung) unterwirft, und
(e) man den Körper aus Schritt (d) sintert, wobei man mindestens zwei unterschiedlich zusammengesetzte Keramikschlicker zur Herstellung des Formkörpers verwendet, wobei das Aufbringen der Keramikschlicker so erfolgt, dass die relativen Anteile der Schlicker ortsabhängig gesteuert werden, so dass die aufgebrachten relativen Anteile der Schlicker innerhalb einer Schicht entlang wenigstens einer Richtung in der Schichtebene in vorgebbarer Weise variieren und wobei das Aufbringungsschema der Schlicker von Schicht zu Schicht variieren kann, **dadurch gekennzeichnet, dass** man in den Schritten (a) und (b) Schlicker verwendet, die
(A) 25 bis 55 Vol.-% Keramikpartikel und
(B) 45 bis 75 Vol.-% radikalisch polymerisierbares Bindemittel enthalten,
und/oder Schlicker, die
(A) 25 bis 55 Vol.-% Keramikpartikel,
(B) 6 bis 50 Vol.-% radikalisch polymerisierbares Bindemittel und
(C) 25 bis 69 Vol.-% Wachs enthalten.

2. Verfahren nach Anspruch 1, bei dem man in den Schritten (a) und (b) zusammen mit dem Keramikschlicker oder im Anschluss an diese Schritte ein Stützmaterial aufbringt.

3. Verfahren nach Anspruch 1 oder 2, bei dem man die Keramikschlicker und ggf. das Stützmaterial durch ein Inkjet-Druckverfahren schichtweise aufbringt.

4. Verfahren nach einem der vorhergehenden Ansprüche, bei dem der erste und/oder zweite Schlicker zusätzlich einen Initiator für die radikalische Polymerisation enthält und man die Schichten durch Bestrahlung mit Licht härtet.

5. Verfahren nach einem der vorhergehenden Ansprüche, bei dem man mindestens einen ersten Schlicker verwendet, der Keramikpartikel auf der Basis von ZrO₂ enthält, und mindestens einen zweiten Schlicker, der Keramikpartikel auf der Basis von Al₂O₃ enthält.

6. Verfahren nach Anspruch 5, bei dem man mindestens einen ersten Schlicker auf der Basis von Y-TZP (Basisschlicker) und mindestens einen zweiten Schlicker (Sekundärschlicker) verwendet, der 20 bis 100 Gew.-% Al₂O₃ und 0 bis 80 Gew.-% Y-TZP, bevorzugt 40-60 Gew.-% Al₂O₃ und 60-40 Gew.-% ZrO₂, besonders bevorzugt 20 Gew.-% Al₂O₃ und 80 Gew.-% Y-TZP enthält.

7. Verfahren nach einem der Ansprüche 1 bis 4, bei dem man Schlicker auf der Basis von Glaskeramikpartikeln verwendet.

8. Verfahren nach Anspruch 7, bei dem man Schlicker auf der Basis von Leucit-, Apatit- und/oder Lithiumdisilikatglaskeramikpartikeln verwendet.

9. Verfahren nach einem der vorhergehenden Ansprüche, bei dem man mindestens zwei Schlicker verwendet, die unterschiedliche gefärbte Keramikpartikel enthalten.

10. Verfahren nach einem der vorhergehenden Ansprüche, bei dem man den Formkörper verblendet.

11. Verfahren nach einem der vorhergehenden Ansprüche, bei dem der Formkörper eine Dentalrestauration ist, insbesondere eine Brücke, ein Brückengerüst, Inlay, Onlay, eine Krone, ein Implantat, Abutment oder ein Veneer.

12. Verfahren nach einem der vorhergehenden Ansprüche, wobei man den Formkörper auf der Basis eines dreidimensionalen Computermodells des Formkörpers erzeugt.

13. Verfahren nach einem der Ansprüche 5 bis 12, bei dem man zur lokalen Verstärkung des Formkörpers den zweiten Schlicker verwendet.

14. Verfahren nach Anspruch 13, bei dem man als ersten Schlicker einen Schlicker auf der Basis von Y-TZP und als zweiten Schlicker einen Schlicker verwendet, der 20 bis 100 Gew.-% Al₂O₃ und 0 bis 80 Gew.-% Y-TZP enthält.

15. Verfahren nach Anspruch 14, bei dem der Formkörper eine Dentalrestauration ist und man das Mischungsverhältnis von erstem und zweitem Schlicker während es Druckvorgangs so einstellt, das in dem zu verstärkenden Bereich ein Verhältnis von 20 Gew.-% Al₂O₃ und 80 Gew.-% Y-TZP erreicht wird.

## Claims

1. Method for the generative production of a moulded article, in which method
(a) ceramic slips are applied in layers onto a support and cured,
(b) a further layer is applied onto the cured layer and cured,
(c) step (b) is repeated as often as needed until an article with the desired geometric shape is obtained,
(d) the article is then subjected to a chemical treatment or to a heat treatment to remove the binding agent (debinding), and
(e) the article from step (d) is sintered,
wherein
at least two differently composed ceramic slips are used to produce the shaped article, wherein the ceramic slips are applied such that the relative proportions of the slips are controlled depending on the position, such that the relative proportions of the applied slips within a layer vary along at least one direction in the layer plane in a predefined manner and wherein the application pattern for the slips can vary from layer to layer,
**characterised in that**
in the steps (a) and (b) slips are used that comprise
(A) 25 to 55 vol. % ceramic particles and
(B) 45 to 75 vol. % radically polymerisable binding agent,
and/or slips that comprise
(A) 25 to 55 vol. % ceramic particles,
(B) 6 to 50 vol. % radically polymerisable binding agent and
(C) 25 to 69 vol. % wax.

2. Method according to claim 1, in which in steps (a) and (b) a support material is applied together with the ceramic slip or subsequent to these steps.

3. Method according to claim 1 or 2, in which the ceramic slips and optionally the support material are applied in layers by an inkjet printing process.

4. Method according to one of the preceding claims, in which the first and/or second slip additionally comprises an initiator for the radical polymerisation, and the layers are cured by irradiation with light.

5. Method according to one of the preceding claims, in which at least one first slip that comprises ceramic particles based on ZrO₂ and at least one second slip that comprises ceramic particles based on Al₂O₃ are used.

6. Method according to claim 5, in which at least one first slip based on Y-TZP (basic slip) and at least one second slip (secondary slip) that comprises 20 to 100 wt % Al₂O₃ and 0 to 80 wt % Y-TZP, preferably 40-60 wt % Al₂O₃ and 60-40 wt % ZrO₂, particularly preferably 20 wt % Al₂O₃ and 80 wt.-% Y-TZP, are used.

7. Method according to one of claims 1 to 4, in which slips based on glass ceramic particles are used.

8. Method according to claim 7, in which slips based on leucite-, apatite- and/or lithium disilicate-glass ceramic particles are used.

9. Method according to one of the preceding claims, in which at least two slips are used which comprise different coloured ceramic particles.

10. Method according to one of the preceding claims, in which the moulded article is veneered.

11. Method according to one of the preceding claims, in which the moulded article is a dental restoration, in particular a bridge, a bridge frame, inlay, onlay, a crown, an implant, abutment or a veneer.

12. Method according to one of the preceding claims, wherein the moulded article is generated on the basis of a three-dimensional computer model of the moulded article.

13. Method according to one of claims 5 to 12, in which the second slip is used to locally reinforce the moulded article.

14. Method according to claim 13, in which a slip based on Y-TZP is used as the first slip and a slip comprising 20 to 100 wt % Al₂O₃ and 0 to 80 wt % Y-TZP is used as the second slip.

15. Method according to claim 14, in which the moulded article is a dental restoration, and the mixing ratio of the first and second slip is adjusted during the printing procedure, such that a proportion of 20 wt % Al₂O₃ and 80 wt % Y-TZP is obtained in the region to be reinforced.

## Revendications

1. Procédé de production générative d'un corps façonné, dans lequel
a) on dépose en couche, sur un support, des barbotines de céramique et on les fait durcir,
b) on dépose sur la couche durcie une autre couche et on la fait durcir,
c) on répète l'étape (b) autant de fois qu'il convient pour obtenir un corps qui ait la forme géométrique voulue,
d) on soumet ensuite le corps à un traitement chimique ou thermique pour en éliminer le liant (« déliantage »),
e) et l'on fritte le corps issu de l'étape (d),
et dans lequel procédé l'on utilise au moins deux barbotines de céramique de compositions différentes pour produire le corps façonné, et l'on effectue le dépôt des barbotines de céramique en ajustant les proportions relatives des barbotines en fonction de l'endroit du dépôt de telle sorte que les proportions relatives des barbotines déposées varient de façon prévisible, au sein d'une couche, dans au moins une direction du plan de la couche, étant entendu que le schéma de dépôt des barbotines peut varier d'une couche à l'autre,
le procédé étant **caractérisé en ce que** l'on utilise, dans les couches (a) et (b), des barbotines qui contiennent
A) de 25 à 55 % en volume de particules de céramique,
B) et de 45 à 75 % en volume d'un liant polymérisable par voie radicalaire,
et/ou des barbotines qui contiennent
A) de 25 à 55 % en volume de particules de céramique,
B) de 6 à 75 % en volume d'un liant polymérisable par voie radicalaire,
C) et de 25 à 69 % en volume d'une cire.

2. Procédé conforme à la revendication 1, dans lequel on dépose pendant les étapes (a) et (b), conjointement avec la barbotine de céramique, ou suite à ces étapes, un matériau support.

3. Procédé conforme à la revendication 1 ou 2, dans lequel on dépose en couches les barbotines de céramique et, le cas échéant, le matériau support par un procédé d'impression par jet d'encre.

4. Procédé conforme à l'une des revendications précédentes, dans lequel la première barbotine et/ou la deuxième barbotine contient ou contiennent en outre un amorceur de polymérisation par voie radicalaire, et l'on fait durcir les couches par irradiation de lumière.

5. Procédé conforme à l'une des revendications précédentes, dans lequel on utilise au moins une première barbotine qui contient des particules de céramique à base de ZrO₂ et au moins une deuxième barbotine qui contient des particules de céramique à base d'Al₂O₃.

6. Procédé conforme à la revendication 5, dans lequel on utilise au moins une première barbotine à base d'Y-TZP (barbotine de base) et au moins une deuxième barbotine (barbotine secondaire) qui contient de 20 à 100 % en poids d'Al₂O₃ et de 0 à 80 % en poids d'Y-TZP, et de préférence de 40 à 60 % en poids d'Al₂O₃ et de 60 à 40 % en poids de ZrO₂, ou bien en particulier, de préférence, 20 % en poids d'Al₂O₃ et 80 % en poids d'Y-TZP.

7. Procédé conforme à l'une des revendications 1 à 4, dans lequel on utilise des barbotines à base de particules de vitrocéramique.

8. Procédé conforme à la revendication 7, dans lequel on utilise des barbotines à base de particules de vitrocéramique de leucite, d'apatite et/ou de disilicate de lithium.

9. Procédé conforme à l'une des revendications précédentes, dans lequel on utilise au moins deux barbotines qui contiennent des particules de céramique colorées différentes.

10. Procédé conforme à l'une des revendications précédentes, dans lequel on revêt le corps façonné.

11. Procédé conforme à l'une des revendications précédentes, dans lequel le corps façonné est une restauration dentaire, en particulier un bridge, une armature de bridge, une incrustation inlay ou onlay, une couronne, un implant, un pilier ou une facette.

12. Procédé conforme à l'une des revendications précédentes, dans lequel on produit le corps façonné en se basant sur un modèle numérique en trois dimensions du corps façonné.

13. Procédé conforme à l'une des revendications 5 à 12, dans lequel on utilise la deuxième barbotine pour renforcer localement le corps façonné.

14. Procédé conforme à la revendication 13, dans lequel on utilise, comme première barbotine, une barbotine à base d'Y-TZP, et comme deuxième barbotine, une barbotine qui contient de 20 à 100 % en poids d'Al₂O₃ et de 0 à 80 % en poids d'Y-TZP.

15. Procédé conforme à la revendication 14, dans lequel le corps façonné est une restauration dentaire et l'on ajuste le rapport de mélange des première et deuxième barbotines, pendant le processus d'impression, de manière à atteindre, dans la zone à renforcer, une proportion de 20 % en poids d'Al₂O₃ pour 80 % en poids d'Y-TZP.
